(19) Europäisches Patentamt / European Patent Office / Office européen des brevets

(11) **EP 4 648 548 A1**

(12) **EUROPEAN PATENT APPLICATION**

(43) Date of publication:
**12.11.2025 Bulletin 2025/46**

(21) Application number: **25171669.2**

(22) Date of filing: **22.04.2025**

(51) International Patent Classification (IPC):
*H04W 84/18* (2009.01)　　*H04W 84/12* (2009.01)

(52) Cooperative Patent Classification (CPC):
**H04W 84/18; H04W 84/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.05.2024 JP 2024076276**

(71) Applicant: **DENSO CORPORATION
Kariya-city, Aichi-pref., 448-8661 (JP)**

(72) Inventors:
• **GOTO, Fumihide
  Kariya-city, Aichi-pref,, 448-8661 (JP)**
• **YAMASHITA, Takuya
  Kariya-city, Aichi-pref,, 448-8661 (JP)**

(74) Representative: **Winter, Brandl - Partnerschaft
mbB
Alois-Steinecker-Straße 22
85354 Freising (DE)**

(54) **CLUSTERING IN WIFI USING NEIGHBOUR AWARENESS NETWORKING**

(57)　　A first wireless communication apparatus 10a includes a controller 110 and a communicator 120. The controller 110 and the communicator 120 are configured to, in order to cause a second wireless communication apparatus 10b to join a cluster including a 10, transmit, to the second wireless communication apparatus 10b by using second frequency band lower than first frequency band, a wireless frame for discovering the second wireless communication apparatus 10b, in response to receiving a response frame from the second wireless communication apparatus 10b, select the first frequency band or second frequency band, and transmit, to the second wireless communication apparatus 10b by using the selected frequency band, a wireless frame for synchronizing with the second wireless communication apparatus 10b.

Fig.5

## Description

Cross-Reference To Related Application

The present application is based on and claims the benefit of priority to Japanese Patent Application No. 2024-076276 filed on May 9, 2024, the contents of which are incorporated herein by reference in its entirety.

## BACKGROUND

Technical Field

The present disclosure relates to a wireless communication apparatus, a wireless communication method, and a program.

Background

Wireless communication technology referred to as "Wi-Fi" (registered trademark) is well known. Wi-Fi uses IEEE802.11 that is a Wireless Local Area Network (wireless LAN, WLAN) standard. Wi-Fi is certified by an industry organization "Wi-Fi Alliance" (registered trademark).

Wi-Fi Alliance has introduced "Wi-Fi Aware" (registered trademark) that is a technology in which a plurality of wireless communication apparatuses form a cluster for transmission and reception of information between wireless communication apparatuses. In Wi-Fi Aware, wireless communication apparatuses within a neighboring area repeatedly establish communication between the wireless communication apparatuses by exchanging a beacon frame with each other to discover a wireless communication apparatus, thereby allowing a plurality of wireless communication apparatuses to form a cluster.

[NPL 1] Wi-Fi Aware Specification Version 4.0

## SUMMARY

The present disclosure provides a first wireless communication apparatus (10a). A first wireless communication apparatus (10a) includes a controller (110) and a communicator (120). The controller (110) and the communicator (120) are configured to, in order to cause a second wireless communication apparatus (10b) to join a cluster including a plurality of wireless communication apparatuses (10), transmit, to the second wireless communication apparatus (10b) by using second frequency band lower than first frequency band, a wireless frame for discovering the second wireless communication apparatus (10b), in response to receiving a response frame from the second wireless communication apparatus (10), select the first frequency band or second frequency band, and transmit, to the second wireless communication apparatus (10b) by using the selected frequency band, a wireless frame for synchronizing with the second wireless communication apparatus (10b).

The present disclosure provides a method performed by a first wireless communication apparatus (10a). The method includes: in order to cause a second wireless communication apparatus (10b) to join a cluster including a plurality of wireless communication apparatuses (10), transmitting, to the second wireless communication apparatus (10b) by using second frequency band lower than first frequency band, a wireless frame for discovering the second wireless communication apparatus (10b); in response to receiving a response frame from the second wireless communication apparatus (10b), selecting the first frequency band or second frequency band; and transmitting, to the second wireless communication apparatus (10b) by using the selected frequency band, a wireless frame for synchronizing with the second wireless communication apparatus (10b).

## BRIEF DESCRIPTION OF THE DRAWINGS

Fig. 1 is a block diagram illustrating a configuration of a wireless communication system;
Fig. 2 is a block diagram illustrating a physical configuration of a wireless communication apparatus;
Fig. 3 is a block diagram illustrating a logical configuration of the wireless communication apparatus;
Fig. 4 is a flowchart illustrating a NAN cluster forming procedure according to the related art;
Fig. 5 is a flowchart illustrating a NAN cluster forming procedure according to a first embodiment;
Fig. 6 is a flowchart illustrating an FTM procedure according to the first embodiment;
Fig. 7 is a flowchart illustrating a NAN cluster forming procedure according to a second embodiment;

Fig. 8 is a diagram illustrating an example in which a wireless communication apparatus is moving;

Fig. 9 is a diagram illustrating an example in which the wireless communication apparatus is moving;

Fig. 10 is a flowchart illustrating a NAN cluster forming procedure according to a third embodiment;

Fig. 11 is a diagram illustrating an example of a NAN cluster according to a fourth embodiment;

Fig. 12 is a diagram illustrating an example of a NAN cluster according to the fourth embodiment;

Fig. 13 is a flowchart illustrating a NAN cluster forming procedure according to the fourth embodiment;

Fig. 14 is a diagram illustrating an example of a NAN cluster according to a fifth embodiment;

Fig. 15 is a diagram illustrating an example of a NAN cluster according to the fifth embodiment;

Fig. 16 is a flowchart illustrating a NAN cluster forming procedure according to the fifth embodiment; and

Fig. 17 is a flowchart illustrating a NAN cluster forming procedure according to a sixth embodiment.

## DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present embodiment. Each embodiment described below can be appropriately modified or changed according to a configuration of an apparatus to which the present embodiment is applied and various conditions. All of combinations of elements included in each embodiment described below are not necessarily required to implement the present embodiment, and a part of the elements can be appropriately omitted. Hence, the scope of the present embodiment is not limited by the configuration described in each embodiment described below. Configurations in which a plurality of configurations described in the embodiments below are combined can also be employed as long as the configurations are consistent with each other.

An example in which a technique according to the present embodiment is applied to autonomous driving usage and the like will be described below. In such usage, a wireless communication apparatus described below is installed in an automobile. The wireless communication apparatus performs wireless communication with a wireless communication apparatus installed in another vehicle and/or a wireless communication apparatus installed on a road and implemented as a sensor.

NPL 1 describes a Wi-Fi Aware specification. Wi-Fi Aware is embodied by a "Neighbor Awareness Networking (NAN)" protocol. In the NAN protocol, wireless communication apparatuses within a neighboring area exchange a NAN beacon frame with each other to thereby discover a wireless communication apparatus.

According to the technology described in NPL 1, a wireless communication apparatus is discovered by exchanging a NAN beacon frame, thereby allowing a wireless communication apparatus to discover a wireless communication apparatus without exchanging location information. In the NAN protocol, establishment of communication between wireless communication apparatuses by discovering a wireless communication apparatus is repeated and thus a large-scale cluster of wireless communication apparatuses can be formed.

NPL 1 does not describe a technique for extending an area in which a wireless frame is received for discovering a wireless communication apparatus. The present disclosure provides a technique for extending an area in which a wireless frame is received for discovering a wireless communication apparatus.

1. First Embodiment

1-1 Wireless Communication System

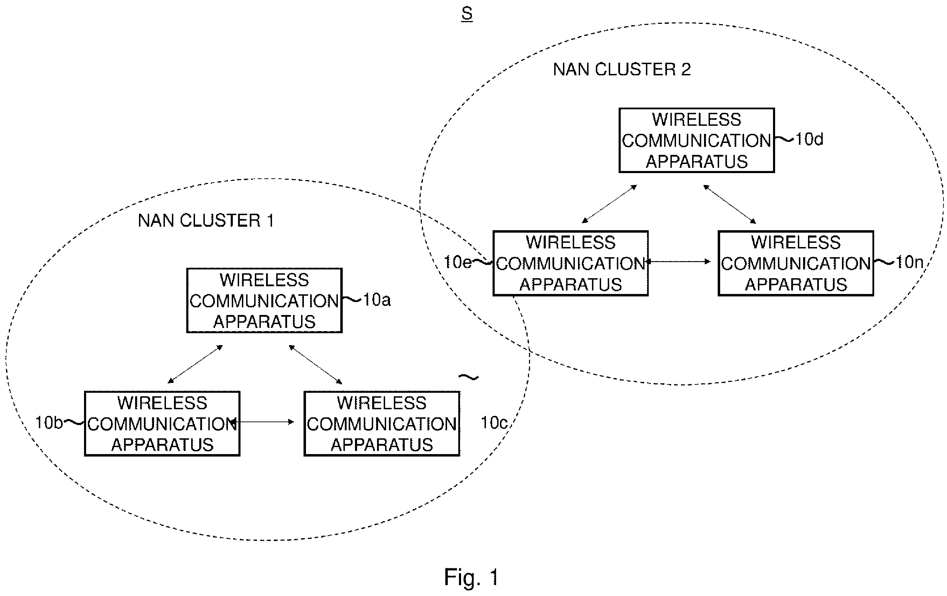

As illustrated in Fig. 1, a wireless communication system S according to the present embodiment includes a plurality of wireless communication apparatuses 10. The wireless communication apparatuses 10 are apparatuses that perform wireless communication with the wireless communication apparatuses 10 in accordance with the IEEE 802.11 standard.

The plurality of wireless communication apparatuses 10 form a cluster in accordance with a NAN protocol. As described below, the NAN protocol does not support a frequency band less than 1 GHz. In the present embodiment, the wireless communication apparatuses exchange a wireless frame, such as a discovery beacon frame, with each other by using a frequency band less than 1 GHz, to thereby form a cluster. In the Specification, the frequency band less than 1 GHz is used, but performing a procedure similar to the NAN protocol also corresponds to "forming a cluster in accordance with the NAN protocol." Accordingly, a cluster formed in such a manner is referred to as a "NAN cluster."

In Fig. 1, wireless communication apparatuses 10a, 10b, and 10c and wireless communication apparatuses 10d, 10e, and 10n form a NAN cluster 1 and a NAN cluster 2, respectively. For example, communication between the wireless communication apparatus 10a in the NAN cluster 1 and the wireless communication apparatus 10d in the NAN cluster 2 connects the NAN cluster 1 and the NAN cluster 2 to each other. In this manner, a NAN network (not illustrated) including of a plurality of NAN clusters is established.

Note that the NAN cluster 1 may be connected to a Basic Service Set (BSS) and/or an Independent Basic Service Set (Independent BSS, IBSS) defined by the IEEE802.11 standards, which is not illustrated. The BSS is a network configuration including an AP and an STA, which is referred to as an infrastructure mode. The IBSS is a network configuration consisting of an STA, which is referred to as an ad-hoc mode.

The wireless communication apparatus 10 functions as a station (STA) and/or an access point (AP) defined in the IEEE802.11 standard. The wireless communication apparatus 10 may be referred to as a "node" or a "NAN device."

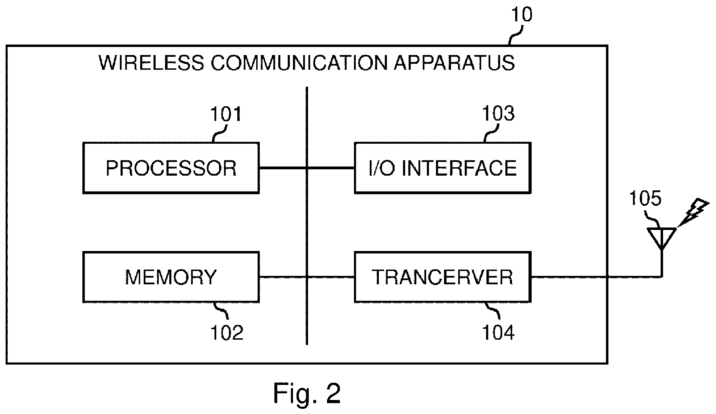

Next, with reference to Fig. 2, a physical configuration of the wireless communication apparatus 10 will be described. As illustrated in Fig. 2, the wireless communication apparatus 10 includes, as physical elements, one or more processors (hereinafter, simply referred to as a processor) 101, a memory 102, an input/output interface 103, a transceiver 104, and an antenna 105. The elements provided in the wireless communication apparatus 10 are connected to each other via an internal bus. Note that the wireless communication apparatus 10 may include a physical element other than the elements illustrated in Fig. 2.

The processor 101 is an arithmetic element that implements various functions of the wireless communication apparatus 10. The processor 101 may be a Central Processing Unit (CPU), a Graphics Processing Unit (GPU), and a System-on-a-Chip (SoC) including an element such as a memory controller.

The memory 102 includes a storage medium, such as a Random Access Memory (RAM) and an embedded Multi Media Card (eMMC). The memory 102 is an element that temporarily or permanently stores a program and data used to execute various types of operations in the wireless communication apparatus 10. The program includes one or more instructions for operations of the wireless communication apparatus 10. The processor 101 deploys the program stored in the memory 102 into the memory 102 and/or a system memory (not illustrated) and executes the program, to thereby implement the functions of the wireless communication apparatus 10.

The input/output interface 103 is an interface that receives an operation to the wireless communication apparatus 10 and supplies the operation to the processor 101, and presents various pieces of information to a user. The input/output interface 103 may include a touch panel, for example.

The transceiver 104 includes a transmitting device and a receiving device (not illustrated), and is a circuit that executes various types of signal processing for implementing wireless communication. The transceiver 104 includes a baseband processor and an RF circuit. The transceiver 104 exchanges a wireless signal with another wireless communication apparatus 10 via the antenna 105.

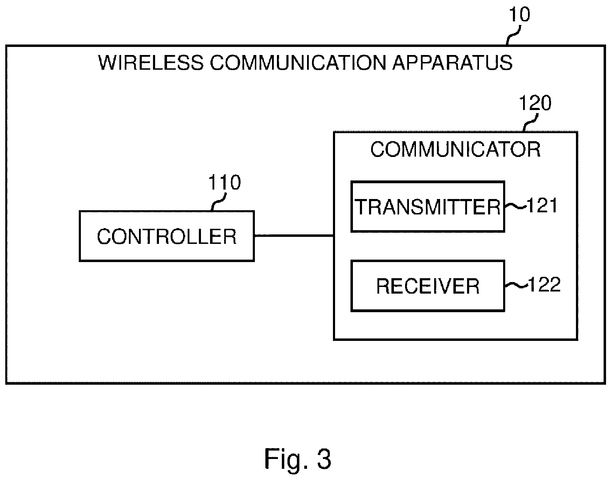

Next, with reference to Fig. 3, a logical configuration of the wireless communication apparatus 10 will be described. As illustrated in Fig. 3, the wireless communication apparatus 10 includes, as logical elements, a controller 110 and a communicator 120. The communicator 120 includes a transmitter 121 and a receiver 122.

The controller 110 includes the processor 101 and the memory 102. **In** other words, the controller 110 is implemented by the processor 101 and the memory 102. The controller 110 executes various types of control processing in the wireless communication apparatus 10. For example, the controller 110 controls wireless communication with another wireless communication apparatus 10 via the communicator 120. When the controller 110 operates, the various types of operations of the wireless communication apparatus 10 of the present embodiment are executed.

The communicator 120 includes the transceiver 104 and the antenna 105. **In** other words, the communicator 120 is implemented by the transceiver 104 and the antenna 105. The communicator 120 exchanges a wireless signal with such another wireless communication apparatus 10, and thereby performs wireless communication with such another wireless communication apparatus 10.

1-2 NAN Protocol

A NAN protocol according to the related art will be described. As described above, NPL 1 defines the NAN protocol. According to the NAN protocol, the wireless communication apparatus 10 serves as one of a master and a non-master (Non-Master Sync) for forming a NAN cluster. Hereinafter, the wireless communication apparatus 10 serving as the master is referred to as a NAN master device. The wireless communication apparatus 10 serving as the non-master is referred to as a NAN non-master device.

The NAN master device serves to cause another wireless communication apparatus 10 (NAN non-master device) to join the NAN cluster. The NAN non-master device performs a predetermined procedure with the NAN master device to thereby join the NAN cluster. For the role of the master, one of the wireless communication apparatuses 10 is selected by a NAN master selection procedure.

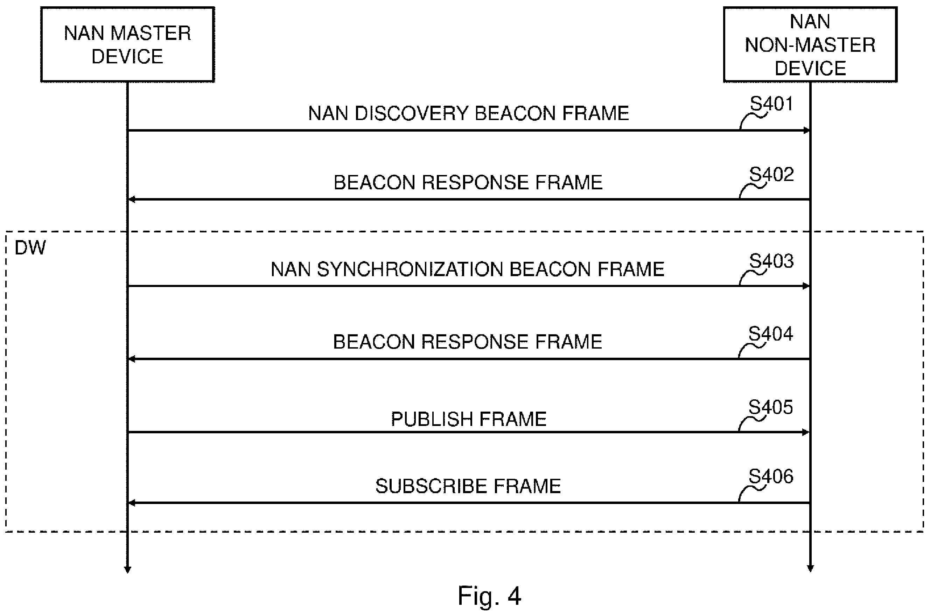

With reference to Fig. 4, a NAN cluster forming procedure according to the NAN protocol in which the NAN master device causes the NAN non-master device to join the NAN cluster will be described. Assume, in an example illustrated in Fig. 4, that the wireless communication apparatus 10a and the wireless communication apparatus 10b illustrated in Fig. 1 serve as the master and the non-master, respectively.

In the procedure illustrated in Fig. 4, the NAN master device discovers the NAN non-master device and synchronizes with the NAN non-master device, to thereby cause the NAN non-master device to join the NAN cluster. According to the NAN protocol, this procedure is referred to as a NAN synchronization procedure.

The NAN synchronization procedure is performed by exchanging a wireless frame between the NAN master device and the NAN non-master device. The wireless frame may be referred to as a wireless signal. The wireless frame includes a Media Access Control (MAC) frame exchanged on a MAC layer. The MAC frame is defined in the IEEE 802.11 standard.

First, the NAN master device transmits a NAN discovery beacon frame (signal) (Step S401). The discovery beacon frame is transmitted at a predetermined cycle. The discovery beacon frame is received by the NAN non-master device within an area in which the discovery beacon frame is received. Next, the NAN non-master device transmits a beacon response frame to the NAN master device (Step S402). Through the operation of Steps S401 and S402, the NAN non-master device within an area near the NAN master device can be discovered.

The operation of Steps S401 and S402 starts a time duration referred to as a Discovery Window (DW). The DW is a time duration in which the NAN master device and the NAN non-master device are synchronized with each other, the NAN master device notifies the NAN non-master device that the NAN master device is providing a service, and the NAN non-master device requests the service from the NAN master device.

The NAN synchronization procedure uses two types of beacon frames: a NAN discovery beacon frame and a NAN synchronization beacon frame. The NAN discovery beacon frame and the NAN synchronization beacon frame are collectively referred to as NAN beacon frames.

Next, the NAN master device transmits a NAN synchronization beacon frame to the NAN non-master device (Step S403). Next, the NAN non-master device transmits a beacon response frame to the NAN master device (Step S404). Through the operation of Steps S403 and S404, the NAN master device and the NAN non-master device can be synchronized with each other.

Next, the NAN master device transmits a publish frame to the NAN non-master device (Step S405). The publish frame is a message for providing notification that the NAN master device is providing a service for the NAN non-master device.

Next, the NAN non-master device transmits a subscribe frame to the NAN master device (Step S406). The subscribe frame is a message for the NAN non-master device requesting a service from the NAN master device.

Note that the operation illustrated in Fig. 4 describes the example in which the NAN master device transmits the publish frame to the NAN non-master device and the NAN non-master device transmits the subscribe frame to the NAN master device, but is not limited to such an example. The NAN non-master device may transmit the publish frame to the NAN master device, and the NAN master device may transmit the subscribe frame to the NAN non-master device.

Note that the NAN master device and the NAN non-master device exchange a follow-up frame for notifying, in the DW, each other of additional information related to a serviced, which is not illustrated. The publish frame, the subscribe frame, and the follow-up frame are collectively referred to as Service Discovery Frames (SDFs).

Through the procedure in Steps S401 to S404 or the procedure in Steps S401 to S406, the NAN non-master device can join the NAN cluster. The NAN master device performs the NAN synchronization procedure with a plurality of NAN non-master devices within a area near the NAN master device, thereby allowing a large-scale cluster to be formed.

NPL 1 describes that the NAN protocol supports 2.4 GHz, 5 GHz, and 6 GHz frequency bands as frequency bands used to exchange wireless frames. These frequency bands are effective for transmission of large amounts of data, but sometimes fail to cause a NAN beacon frame to be received at a wide area. NPL 1 does not describe a technique for extending an area in which the NAN beacon frame is received.

Next, an overview of the first embodiment will be described. In the present embodiment, a beacon frame is transmitted by using a frequency band lower than a frequency band supported by the NAN protocol. The frequency band lower than the frequency band supported by the NAN protocol is, for example, a 920 MHz frequency band, in other words, a frequency band less than 1 GHz (sub-1GHz).

The IEEE802.11ah standard defines a wireless frame transmitted by using the 920 MHz frequency band. The IEEE802.11.ah standard is also referred to as Wi-Wi HaLow (registered trademark). The 920 MHz frequency band has straightness of a radio wave weaker than that of 2.4 GHz, 5 GHz, and 6 GHz frequency bands. Accordingly, a wireless frame transmitted by using the 920 MHz frequency band is propagated to a wider area.

In the present embodiment, a beacon frame is transmitted by using the frequency band lower than the frequency band supported by the NAN protocol, thereby allowing the wireless communication apparatus 10 located in a wider area to be discovered. In the present embodiment, selection is made on whether wireless communication with the discovered wireless communication apparatus 10 is performed by using the frequency band supported by the NAN protocol, in other words, 2.4 GHz, 5 GHz, or 6 GHz frequency band, or is performed according to the IEEE802.11.ah standard, in other words, by using a 920 MHz frequency band.

Hereinafter, a wireless communication scheme using the frequency band supported by the NAN protocol is referred to as a "first wireless communication scheme." The frequency band used for the first wireless communication scheme is referred to as a "first frequency band." A wireless communication scheme according to the IEEE802.11ah standard, in other words, a wireless communication scheme using a 920 MHz frequency band, is referred to as a "second wireless communication scheme." The frequency band used for the second wireless communication scheme is referred to as a "second frequency band."

1-3 NAN Cluster Forming Procedure

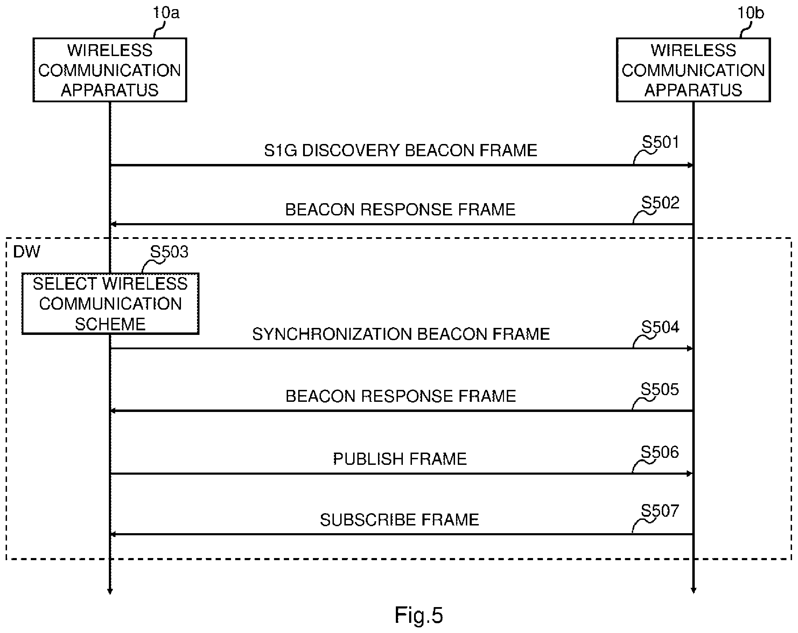

With reference to Fig. 5, a NAN cluster forming procedure according to the first embodiment will be described. In an example illustrated in Fig. 5, the wireless communication apparatus 10a illustrated in Fig. 1 discovers the wireless communication apparatus 10b, and causes the wireless communication apparatus 10b to join a NAN cluster. The NAN cluster is an aggregation of a plurality of wireless communication apparatuses 10 that perform wireless communication with each other by using the first wireless communication scheme or the second wireless communication scheme. For example, the wireless communication apparatus 10a is installed in an automobile, and, for example, the wireless communication apparatus 10b is installed on a road and implemented as a sensor.

First, a communicator 120 of the wireless communication apparatus 10a transmits a discovery beacon frame to the wireless communication apparatus 10b by using the second frequency band (Step S501). This discovery beacon frame is referred to as a "sub-1GHz (discovery) beacon frame" or "S1G (discovery) beacon frame" in order to be distinguished from a NAN discovery beacon frame, in other words, a beacon frame transmitted by using the first frequency band.

Next, a communicator 120 of the wireless communication apparatus 10b transmits a beacon response frame to the wireless communication apparatus 10a by using the second frequency band (Step S502). The operation of Steps S501 and S502 allows the wireless communication apparatus 10 located in a wider area to be discovered, as compared with the transmission using the first frequency band. Through the operation of Steps S501 and S502, a DW is started.

Note that when the wireless communication apparatus 10b fails to receive the S1G discovery beacon frame when a predetermined time lapses after Step S502, the communicator 120 of the wireless communication apparatus 10b may transmit a probe request frame to the wireless communication apparatus 10ad, which is not illustrated. In this case, the communicator 120 of the wireless communication apparatus 10a transmits a probe response frame to the wireless communication apparatus 10b. Both of the probe request frame and the probe response frame are transmitted by using the second frequency band.

Next, a controller 110 of the wireless communication apparatus 10a selects which of the first wireless communication scheme or the second wireless communication scheme is to be employed for wireless communication with the wireless communication apparatus 10b (Step 503). As described above, as compared with using the first frequency band, using the second frequency band allows the beacon frame to be received in a wider area, but, on the other hand, fails to transmit large amounts of data. Depending on a distance between the wireless communication apparatus 10a and the wireless communication apparatus 10b, there is also a case where using the first frequency band fails to achieve stable wireless communication.

For stable communication of large amounts of data, it is preferable that wireless communication with the wireless communication apparatus 10b is performed in the first wireless communication scheme after the wireless communication apparatus 10b is discovered. From this viewpoint, in Step S503, whether wireless communication can be performed in the first wireless communication scheme is determined. The wireless frames are exchanged in the second wireless communication scheme in Steps S501 and S502, and thus a case where it is determined that wireless communication can be performed in the first wireless communication scheme leads to switching of a wireless communication scheme from the second wireless communication scheme to the first wireless communication scheme.

The controller 110 selects the first wireless communication scheme or the second wireless communication scheme, based on (1) a distance between the wireless communication apparatus 10a and the wireless communication apparatus 10b, (2) a received signal strength of a wireless frame from the wireless communication apparatus 10b, and/or (3) a requirement requested by the wireless communication apparatus 10b.

In the selection based on the distance between the wireless communication apparatus 10a and the wireless communication apparatus 10b, for example, employment of the first wireless communication scheme may be selected when the distance is less than a predetermined threshold. A case where the distance between the wireless communication apparatus 10a and the wireless communication apparatus 10b is less than the predetermined threshold means that the wireless communication apparatus 10a and the wireless communication apparatus 10b are within a predetermined area. Thus, in such a case, both apparatuses can stably perform wireless communication of large amounts of data by employing the first wireless communication scheme rather than the second wireless communication scheme.

On the other hand, employment of the second wireless communication scheme may be selected when the distance between the wireless communication apparatus 10a and the wireless communication apparatus 10b is greater than the predetermined threshold. A case where the distance between the wireless communication apparatus 10a and the wireless communication apparatus 10b is greater than the predetermined threshold means that the wireless communication apparatus 10a and the wireless communication apparatus 10b are outside the predetermined area. Thus, in such a case, both apparatuses can stably perform wireless communication by employing the second wireless communication scheme rather than the first wireless communication scheme.

The distance between the wireless communication apparatus 10a and the wireless communication apparatus 10b may be measured in accordance with a Fine Timing Measurement (FTM) procedure. FTM is a protocol for measuring, based on a time of arrival of a wireless frame exchanged between the wireless communication apparatus 10a and the wireless communication apparatus 10b, a distance between both apparatuses, and is defined in the IEEE802.11 standard.

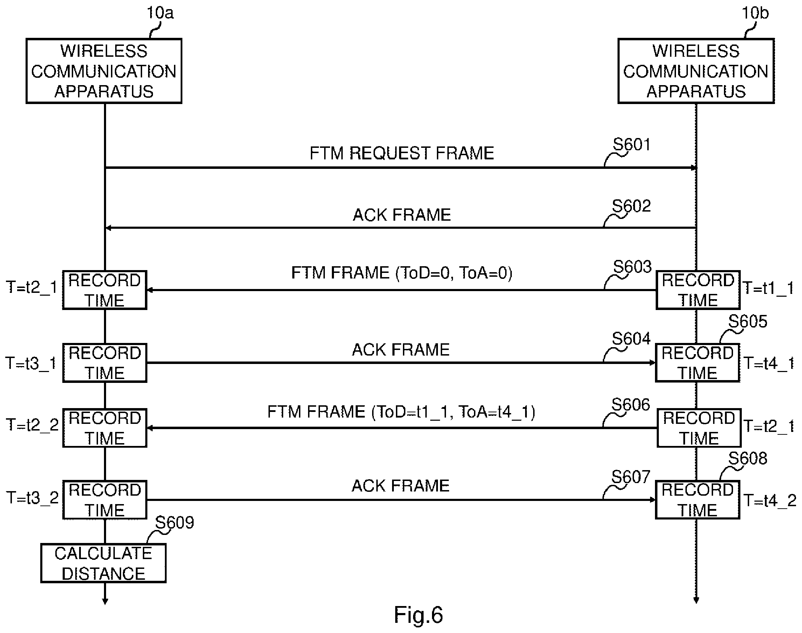

With reference to Fig. 6, the FTM procedure will be described. In the FTM procedure illustrated in Fig. 6, an FTM frame and the like are exchanged between the wireless communication apparatus 10a and the wireless communication apparatus 10b.

In Step S601, the communicator 120 of the wireless communication apparatus 10a transmits an FTM request frame to the wireless communication apparatus 10b. The FTM request frame is a wireless frame for requesting the wireless communication apparatus 10b to initiate the FTM procedure. Next, the wireless communication apparatus 10b transmits an Ack frame to the wireless communication apparatus 10a (Step S602).

Next, the communicator 120 of the wireless communication apparatus 10b transmits an FTM frame to the wireless communication apparatus 10a (Step S603). The FTM frame includes a parameter indicating that a Time Of Departure (ToD) of the FTM frame is zero and a parameter indicating that a Time Of Arrival (ToA) of the FTM frame is zero. The controller 110 of the wireless communication apparatus 10b records a transmission time (T = t1_1) of the FTM frame.

Next, the communicator 120 of the wireless communication apparatus 10a receives the FTM frame, and transmits an Ack to the wireless communication apparatus 10b (Step S604). The controller 110 of the wireless communication apparatus 10a records a reception time (T = t2_1) of the FTM frame and a transmission time (T = t3_1) of the Ack.

Next, the communicator 120 of the wireless communication apparatus 10b receives the Ack (Step S605). The controller 110 of the wireless communication apparatus 10b records a reception time (T = t4_1) of the Ack.

Next, the communicator 120 of the wireless communication apparatus 10b transmits an FTM frame to the wireless communication apparatus 10a (Step S606). The FTM frame includes a parameter indicating that ToD = t1_1 and a parameter indicating that ToA = t4_1. The controller 110 of the wireless communication apparatus 10b records a transmission time (T = t2_1) of the FTM frame.

Next, the communicator 120 of the wireless communication apparatus 10a receives the FTM frame, and transmits an Ack to the wireless communication apparatus 10b (Step S607). The controller 110 of the wireless communication apparatus 10a records a reception time (T = t2_2) of the FTM frame and a transmission time (T = t3_2) of the Ack.

Next, the communicator 120 of the wireless communication apparatus 10b receives the Ack (Step S608). The controller 110 of the wireless communication apparatus 10b records a reception time (T = t4_2) of the Ack.

Next, the controller 110 of the wireless communication apparatus 10a calculates a round trip time (RTT) according to Equation (1) and calculates a distance D according to Equation (2) (Step S609). In Equation (2), c represents a propagation speed c of the wireless frame.

$$RTT = (t4\_1 - t1\_1) - (t3\_1 - t2\_1) \qquad \text{Equation (1)}$$

$$D = c \times (RTT/2) \quad \text{Equation (2)}$$

The distance between the wireless communication apparatus 10a and the wireless communication apparatus 10b may be measured by transmission of location information such as GPS information, from the wireless communication apparatus 10b to the wireless communication apparatus 10a, instead of being measured in accordance with the FTM procedure. The GPS information may be carried, for example, in the beacon response frame transmitted in Step S502 or the probe response frame (not illustrated).

In the selection based on the received signal strength of the wireless frame from the wireless communication apparatus 10b, for example, employment of the first wireless communication scheme may be selected when the signal strength is greater than a predetermined threshold. A case where the signal strength is greater than the predetermined threshold means that the wireless communication apparatus 10a and the wireless communication apparatus 10b are within a predetermined area. Thus, in such a case, it is conceivable that both apparatuses can stably perform wireless communication of large amounts of data by employing the first wireless communication scheme rather than the second wireless communication scheme.

On the other hand, when the signal strength is less than the predetermined threshold, employment of the second wireless communication scheme may be selected. A case where the signal strength is less than the predetermined threshold means that the wireless communication apparatus 10a and the wireless communication apparatus 10b are outside the predetermined area. Thus, in such a case, both apparatuses can stably perform wireless communication by employing the second wireless communication scheme rather than the first wireless communication scheme.

The signal strength is measured, for example, based on a Received Signal Strength Indicator (RSSI). Note that when the selection based on the received signal strength is performed, the signal strength differs between a wireless frame transmitted by using the first frequency band and a wireless frame transmitted by using the second frequency band. Considering this, a signal strength of a wireless frame transmitted from the wireless communication apparatus 10b by using the first frequency band may be measured.

In the case, in Step S503, for example, the wireless communication apparatus 10a may request the wireless communication apparatus 10b to transmit a wireless frame by using the first frequency band.

Note that Japan and other countries define, in the wireless communication scheme according to the IEEE802.11ah standard, that a transmission time is limited to 10% of a total time (Duty ratio of 10%) or less. It is unpreferable, under this limitation, to transmit large amounts of data / long-term data in the first wireless communication scheme. Considering this limitation, when the distance between the wireless communication apparatus 10a and the wireless communication apparatus 10b is greater than the predetermined threshold or when the signal strength is less than the predetermined threshold, the wireless communication apparatus 10a may reject communication with the wireless communication apparatus 10b instead of selecting employment of the second wireless communication scheme.

In the selection based on the requirement requested by the wireless communication apparatus 10b, for example, it is preferable that when the wireless communication apparatus 10b requests communication of large amounts of data, a higher frequency band is used. Accordingly, in such a case, employment of the first wireless communication scheme may be selected. For such a requirement, in the beacon response frame transmitted in Step S502 or another wireless frame, the wireless communication apparatus 10b may notify the wireless communication apparatus 10a of, for example, a data type or a data requirement. The data type or the data requirement may indicate, for example, "1: large-capacity communication," "2: small-capacity communication," or the like.

For example, information from the wireless communication apparatus 10b installed on a road or the like and implemented as a sensor for detecting collision of an automobile or the like is assumed to be urgent/high-priority data communication. Accordingly, it is preferable that when the wireless communication apparatus 10b requests urgent/high-priority data communication, a lower frequency band is used for communication in a wider area. In such a case, employment of the second wireless communication scheme may be selected. For such an urgent requirement and priority, in the beacon response frame transmitted in Step S502 or another wireless frame, the wireless communication apparatus 10b may notify the wireless communication apparatus 10a of, for example, a data type or a data priority. The data type or the data priority may indicate, for example, "1: high-priority," "2: urgent," or the like.

Note that the wireless communication scheme may be employed based on any combination of the distance between the wireless communication apparatus 10a and the wireless communication apparatus 10b, the received signal strength of the wireless frame from the wireless communication apparatus 10b, and the requirement requested by the wireless communication apparatus 10b described above.

Returning to the description of Fig. 5, Steps S504 to S507 are performed in the wireless communication scheme selected in Step S503. Note that when communication with the wireless communication apparatus 10b is rejected in Step S503, the operation illustrated in Fig. 5 ends at that timing, which is not illustrated.

In Step S504, the wireless communication apparatus 10a transmits a synchronization beacon frame to the wireless communication apparatus 10b. When the first wireless communication scheme is selected in Step S503, the synchronization beacon frame corresponds to a NAN beacon frame. When the second wireless communication scheme is selected, the synchronization beacon frame corresponds to an S1G beacon frame.

Next, the wireless communication apparatus 10b transmits a beacon response frame to the wireless communication apparatus 10a (Step S505). When the first wireless communication scheme is selected in Step S503, the beacon response frame is transmitted by using the first frequency band. When the second wireless communication scheme is selected, the beacon response frame is transmitted by using the second frequency band.

Note that even when the first wireless communication scheme is selected in Step S503, there is a case where the NAN synchronization beacon frame cannot be received at the wireless communication apparatus 10b, due to a distance between the wireless communication apparatus 10a and the wireless communication apparatus 10b / an obstacle located between the apparatuses, or the like. Considering such a case, the wireless communication apparatus 10a may, when not receiving the beacon response frame in a predetermined period since the NAN synchronization beacon frame has been transmitted, transmit an error response frame to the wireless communication apparatus 10b by using the second frequency band.

Next, the wireless communication apparatus 10a transmits a publish frame to the wireless communication apparatus 10b (Step S506). When the first wireless communication scheme is selected in Step S503, the publish frame is transmitted by using the first frequency band. When the second wireless communication scheme is selected, the publish frame is transmitted by using the second frequency band.

Next, the NAN non-master device transmits a subscribe frame to the NAN master device (Step S507). When the first wireless communication scheme is selected in Step S503, the subscribe frame is transmitted by using the first frequency band. When the second wireless communication scheme is selected, the subscribe frame is transmitted by using the second frequency band. In this manner, the wireless communication apparatuses 10 can discover the wireless communication apparatus 10 within a wider area, and can cause the discovered wireless communication apparatus 10 to join the NAN cluster.

As described above, the first embodiment is described. The first embodiment can discover a wireless communication apparatus within a wider area to form a NAN cluster, as compared with the related art. A wireless communication scheme to be employed is selected based on a distance from a discovered wireless communication apparatus / requirement requested by the wireless communication apparatus, or the like, thereby allowing stable wireless communication to be achieved after a NAN cluster is formed.

2. Second Embodiment

Next, a second embodiment will be described. As described above, in the wireless communication scheme according to the IEEE802.11ah standard, the Duty ratio is limited to 10% or less. Accordingly, there is also a case where it is unpreferable that a discovery beacon frame is transmitted without limitation by using the second frequency band.

In the second embodiment, in addition to the example described in the first embodiment, in the NAN cluster forming procedure, whether the discovery beacon frame is transmitted by using the second frequency band is determined.

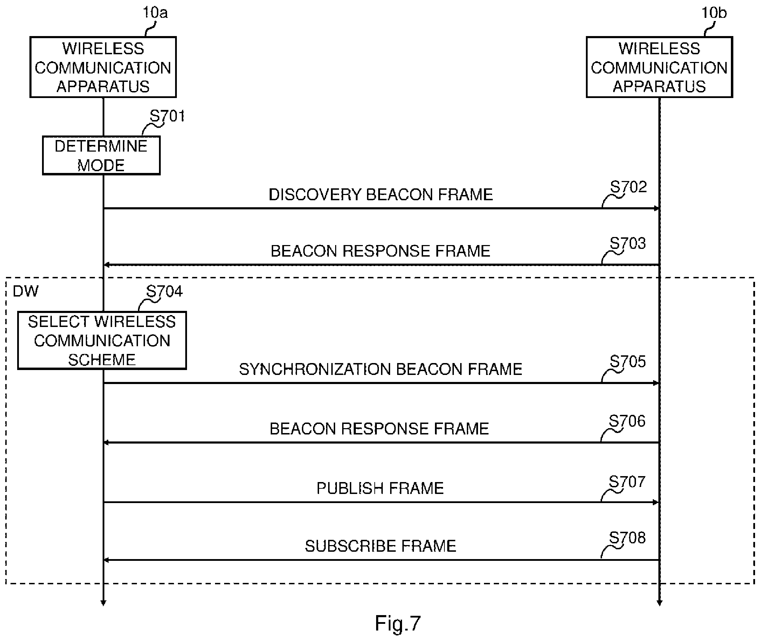

With reference to Fig. 7, a NAN cluster forming procedure according to the second embodiment will be described. Also in an example illustrated in Fig. 7, the wireless communication apparatus 10a discovers the wireless communication apparatus 10b, and causes the wireless communication apparatus 10b to join a NAN cluster.

It is assumed that the NAN cluster forming procedure described in the first embodiment, in other words, discovery of the wireless communication apparatus 10b located in a wider area, is mainly applied to a situation where the wireless communication apparatus 10a is moving. On the other hand, in a situation where the wireless communication apparatus 10a is fixed/stationary, it is assumed that there is also a case where the necessity of discovering the wireless communication apparatus 10b located in a wider area is low.

In the present embodiment, when there is no need to discover the wireless communication apparatus 10b located in a wider area, in the NAN cluster forming procedure, a NAN discovery beacon frame, in other words, a discovery beacon frame is transmitted by using the first frequency band. When such procedure is performed, the wireless communication apparatus 10a is in a "first mode."

On the other hand, when there is a need to discover the wireless communication apparatus 10b located in a wider area, in the NAN cluster forming procedure, an S1G discovery beacon frame, in other words, a discovery beacon frame using the second frequency band is transmitted. When such procedure is performed, the wireless communication apparatus 10a is in a "second mode."

In Step S701, the controller 110 of the wireless communication apparatus 10a determines which of the first mode or the second mode the wireless communication apparatus 10a is in, based on whether the wireless communication apparatus 10a is moving. Which of the first mode or the second mode the wireless communication apparatus 10a is in is controlled by a state machine. For example, the controller 110 controls the state machine so that a mode of the wireless communication apparatus 10a transitions to the second mode, in response to receiving, from a navigation system implemented in an automobile, information indicating that an engine of the automobile is in operation. The mode of the wireless communication apparatus 10a may transition to the second mode in response to an operation on the input/output interface 103 by a driver.

The case that the mode of the wireless communication apparatus 10a transitions to the second mode in response to the running of engine or the operation by the driver, as described above, is merely an example. The wireless communication apparatus 10a may transition between the first mode and the second mode, based on another criterion.

Next, the communicator 120 of the wireless communication apparatus 10a transmits a discovery beacon frame to the wireless communication apparatus 10b (Step S702). When, in Step S701, the wireless communication apparatus 10a is determined to be in the first mode, the discovery beacon frame is transmitted by using the first frequency band. When the wireless communication apparatus 10a is determined to be in the second mode, the discovery beacon frame is transmitted by using the second frequency band.

Next, the communicator 120 of the wireless communication apparatus 10b transmits a beacon response frame to the wireless communication apparatus 10a by using the second frequency band (Step S703). When, in Step S701, the wireless communication apparatus 10a is determined to be in the first mode, the beacon response frame is transmitted by using the first frequency band. When the wireless communication apparatus 10a is determined to be in the second mode, the beacon response frame is transmitted by using the second frequency band.

Next, operation of Steps S704 to S708 is performed. The operation of Steps S704 to S708 is similar to the operation of Steps S503 to S507 described with reference to Fig. 5, and thus detailed description thereof will be omitted.

As described above, the second embodiment is described. According to the second embodiment, when the necessity of discovering a wireless communication apparatus located in a wider area is low, transmission of a beacon frame using the second frequency band is restricted. With this, in addition to the advantage described in the first embodiment, it is possible to suppress the Duty ratio limited by the wireless communication scheme according to the IEEE802.11ah standard.

3. Third Embodiment

Next, a third embodiment will be described. The first and second embodiments describe the examples in which after the S1G discovery beacon frame is transmitted, which of the first wireless communication scheme or the second wireless communication scheme is to be employed is selected. In the third embodiment, in addition to the examples described in the first and second embodiments, which of the first wireless communication scheme or the second wireless communication scheme is to be employed is selected after a wait for a predetermined period after a response frame from the S1G discovery beacon frame is received.

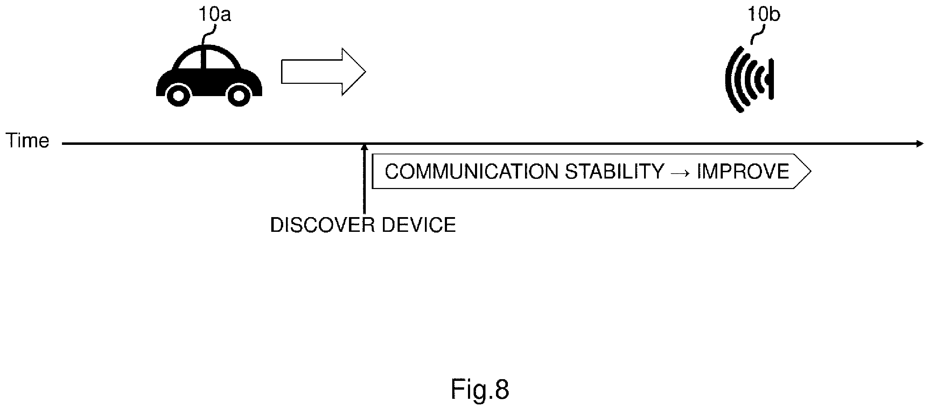

For example, consider an example in which the wireless communication apparatus 10a installed in an automobile discovers the wireless communication apparatus 10b installed on a road and implemented as a sensor. As illustrated in Fig. 8, assume that the automobile provided with the wireless communication apparatus 10a is advancing toward the wireless communication apparatus 10b. In this case, after the wireless communication apparatus 10a transmits an S1G discovery beacon frame to the wireless communication apparatus 10b to thereby discover the wireless communication apparatus 10b, the wireless communication apparatus 10a approaches the wireless communication apparatus 10b. In such a case, the wireless communication apparatus 10a can stably communicate with the wireless communication apparatus 10b after discovering the wireless communication apparatus 10b.

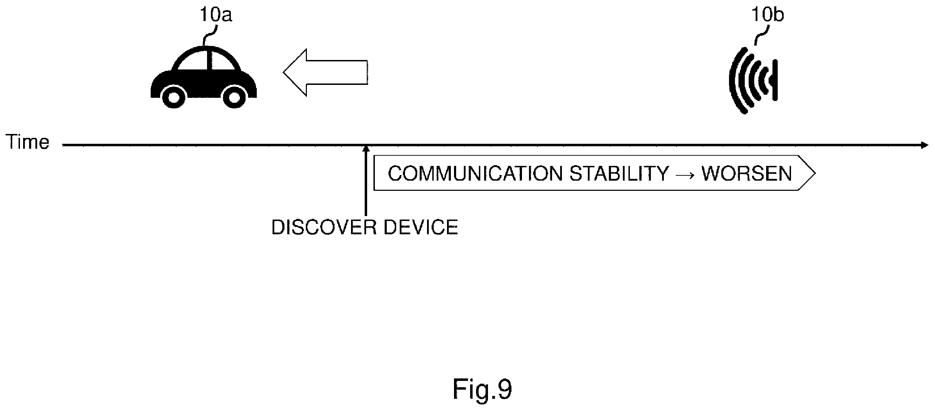

On the other hand, as illustrated in Fig. 9, assume that the automobile provided with the wireless communication apparatus 10a is advancing in a direction opposite to the wireless communication apparatus 10b. In this case, after the wireless communication apparatus 10a discovers the wireless communication apparatus 10b, the wireless communication apparatus 10a is away from the wireless communication apparatus 10b. In such a case, the wireless communication apparatus 10a fails to stably communicate with the wireless communication apparatus 10b after discovering the wireless communication apparatus 10b, as compared with the example illustrated in Fig. 8. The wireless communication apparatus 10a moves away from the wireless communication apparatus 10b, and thus it is also assumed that communication with the wireless communication apparatus 10b is unnecessary in the first place.

As described above, when the wireless communication apparatus 10a is moving, a distance of the wireless communication apparatus 10a from the wireless communication apparatus 10b varies, and the variation may affect communication stability. There is a possibility that performing immediately the operation for selecting which of the first wireless communication scheme or the second wireless communication scheme is to be employed after the wireless communication apparatus 10a discovers the wireless communication apparatus 10b prevents the above-described variation from being determined with sufficient accuracy. The third embodiment handles such an issue.

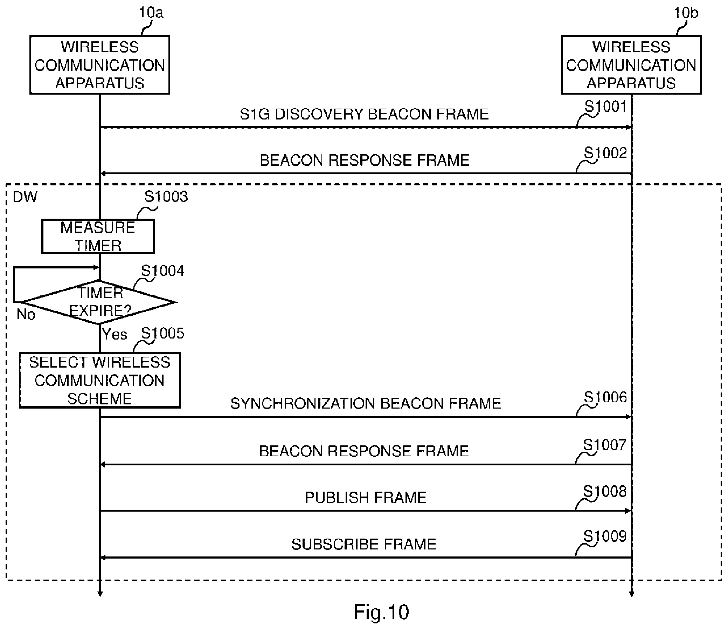

With reference to Fig. 10, a NAN cluster forming procedure according to the third embodiment will be described. Also in an example illustrated in Fig. 10, the wireless communication apparatus 10a discovers the wireless communication apparatus 10b, and causes the wireless communication apparatus 10b to join a NAN cluster.

First, the communicator 120 of the wireless communication apparatus 10a transmits a discovery beacon frame to the wireless communication apparatus 10b by using the second frequency band (Step S1001). Next, the communicator 120 of the wireless communication apparatus 10b transmits a beacon response frame to the wireless communication apparatus 10a by using the second frequency band (Step S1002). Through the operation of Steps S1001 and S1002, a DW is started.

The controller 110 of the wireless communication apparatus 10a starts a timer for measurement (Step S1003). The controller 110 monitors whether the timer expires in a predetermined time (Step S1004). The controller 110 continues the operation of Step S1004 when the timer does not expire, and transitions to operation of Step S1005 when the timer has expired.

Next, the controller 110 of the wireless communication apparatus 10a selects which of the first wireless communication scheme or the second wireless communication scheme is to be employed for wireless communication with the wireless communication apparatus 10b (Step 1003). The operation of Step S1003 is performed in a manner similar to that of Step S503 described with reference to Fig. 5.

Alternatively, when the wireless communication scheme is selected based on a distance between the wireless communication apparatus 10a and the wireless communication apparatus 10b, the controller 110 may measure the distance between the wireless communication apparatus 10a and the wireless communication apparatus 10b twice and may determine whether a difference between the measured distances is a positive value or a negative value. In this case, the distance between the wireless communication apparatus 10a and the wireless communication apparatus 10b is measured twice before and after Step S1003, in other words, before and after the expiration of the timer.

For example, the controller 110 calculates, according to Equation (3), a difference $\text{diff}^D$ between a distance $D_1$ measured before the expiration of the timer and a distance $D_2$ measured after the expiration of the timer.

$$\text{diff}^{D} = D_1 - D_2 \quad \text{Equation (3)}$$

A case where $\text{diff}^D$ has a negative value means that the distance between the wireless communication apparatus 10a and the wireless communication apparatus 10b becomes longer in a period from before the expiration of the timer to after the expiration of the timer. In other words, the case means that the wireless communication apparatus 10a moves away from the wireless communication apparatus 10b. In such a case, the wireless communication apparatus 10a employs the second wireless communication scheme or rejects communication with the wireless communication apparatus 10b so as to enable communication over a longer distance.

On the other hand, a case where $\text{diff}^D$ has a positive value means that the distance between the wireless communication apparatus 10a and the wireless communication apparatus 10b becomes shorter in the period from before the expiration of the timer to after the expiration of the timer. In other words, the case means that the wireless communication apparatus 10a moves to approach the wireless communication apparatus 10b. In such a case, communication over a longer distance is unnecessary, and thus the wireless communication apparatus 10a employs the first wireless communication scheme.

When the wireless communication scheme is selected based on a received signal strength of a wireless frame from the wireless communication apparatus 10b, the controller 110 may measure the received signal strength of the wireless frame from the wireless communication apparatus 10b twice and may determine whether a difference between the measured received signal strengths is a positive value or a negative value. Also in this case, the received signal strength of the wireless frame from the wireless communication apparatus 10b is measured twice before and after the expiration of the timer.

For example, the controller 110 calculates, according to Equation (4), a difference $\text{diff}^P$ between a received signal strength $P_1$ measured before the expiration of the timer and a received signal strength $P_2$ measured after the expiration of the timer.

$$\text{diff}^{P} = P_1 - P_2 \quad \text{Equation (4)}$$

A case where $\text{diff}^P$ has a positive value means that the received signal strength of the wireless frame from the wireless communication apparatus 10b becomes weaker in a period from before the expiration of the timer to after the expiration of the timer. In other words, the case means that the wireless communication apparatus 10a moves away from the wireless communication apparatus 10b. In such a case, the wireless communication apparatus 10a employs the second wireless communication scheme or rejects communication with the wireless communication apparatus 10b so as to enable communication over a longer distance.

On the other hand, a case where $\text{diff}^P$ has a negative value means that the received signal strength of the wireless frame from the wireless communication apparatus 10b becomes stronger in the period from before the expiration of the timer to after the expiration of the timer. In other words, the case means that the wireless communication apparatus 10a moves to approach the wireless communication apparatus 10b. In such a case, communication over a longer distance is unnecessary, and thus the wireless communication apparatus 10a employs the first wireless communication scheme.

Returning to the description of Fig. 10, next, operation of Steps S1006 to S1009 is performed. The operation of Steps S1006 to S1009 is similar to the operation of Steps S504 to S507 described with reference to Fig. 5, and thus detailed description thereof will be omitted.

Note that, also in the third embodiment, as described in the second embodiment, which of the first mode or the second mode the wireless communication apparatus 10a is in may be determined in the NAN cluster forming procedure.

As described above, the third embodiment is described. According to the third embodiment, variation in a moving distance of the wireless communication apparatus 10a or the like is accurately determined. With this, in addition to the advantages described in the first and second embodiments, it is possible to employ an appropriate wireless communication scheme, depending on communication stability caused by the variation.

4. Fourth Embodiment

Next, a fourth embodiment will be described. The first to third embodiments describe the examples in which the discovery beacon frame is transmitted by using the second frequency band when a wireless communication apparatus located in a wider area is discovered.

The discovery beacon frame is transmitted by using the second frequency band, thereby allowing a wireless communication apparatus located in a wider area to be discovered. On the other hand, there is also a case where a discovery beacon frame sufficiently is received at a wireless communication apparatus present over a short distance even when the first frequency band is used.

As described above, in the wireless communication scheme according to the IEEE802.11ah standard, the duty ratio is limited to 10% or less. Accordingly, there is also a case where it is unpreferable that a discovery beacon frame is transmitted without limitation by using the second frequency band.

In the fourth embodiment, in addition to the examples described in the first to third embodiments, in the NAN cluster forming procedure, a NAN cluster forming procedure using the second frequency band is performed after a NAN cluster forming procedure using the first frequency band is performed.

The NAN cluster forming procedure using the first frequency band, in other words, the NAN cluster forming procedure according to the related art described with reference to Fig. 4, allows a wireless communication apparatus present over a short distance to join a NAN cluster.

For example, consider an example in which the wireless communication apparatus 10a causes the wireless communication apparatuses 10b, 10c, 10d, 10e, and 10n to join a NAN cluster. Assume that a wireless frame transmitted by the wireless communication apparatus 10a using the first frequency band is received at the wireless communication apparatuses 10b and 10c and cannot be received at the wireless communication apparatuses 10d, 10e, and 10n. On the other hand, assume that a wireless frame transmitted by the wireless communication apparatus 10a using the second frequency band is received at the wireless communication apparatuses 10d, 10e, and 10n.

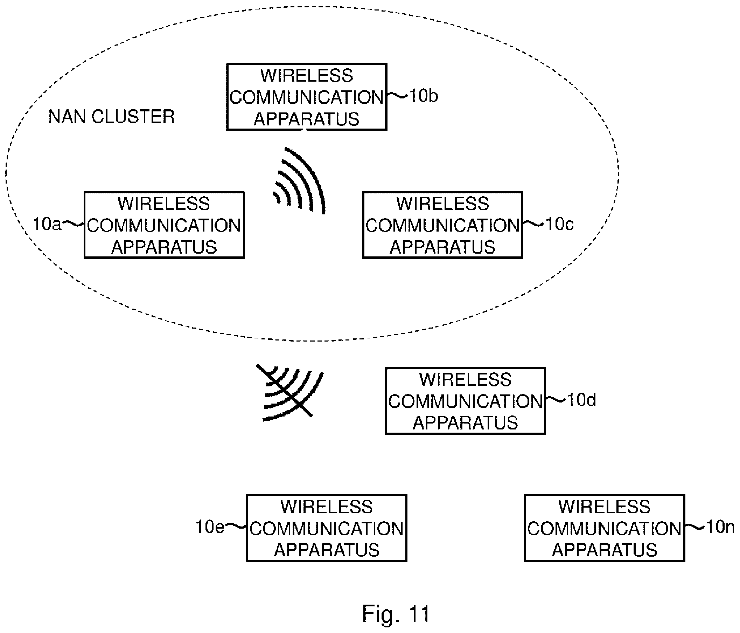

First, the wireless communication apparatus 10a performs the NAN cluster forming procedure using the first frequency band. As illustrated in Fig. 11, this procedure can discover only the wireless communication apparatuses 10b and 10c present over a short distance, and can cause these wireless communication apparatuses to join a NAN cluster. On the other hand, a wireless frame transmitted by using the first frequency band cannot be received at the wireless communication apparatuses 10d, 10e, and 10n, thereby preventing the wireless communication apparatuses 10d, 10e, and 10n from being discovered.

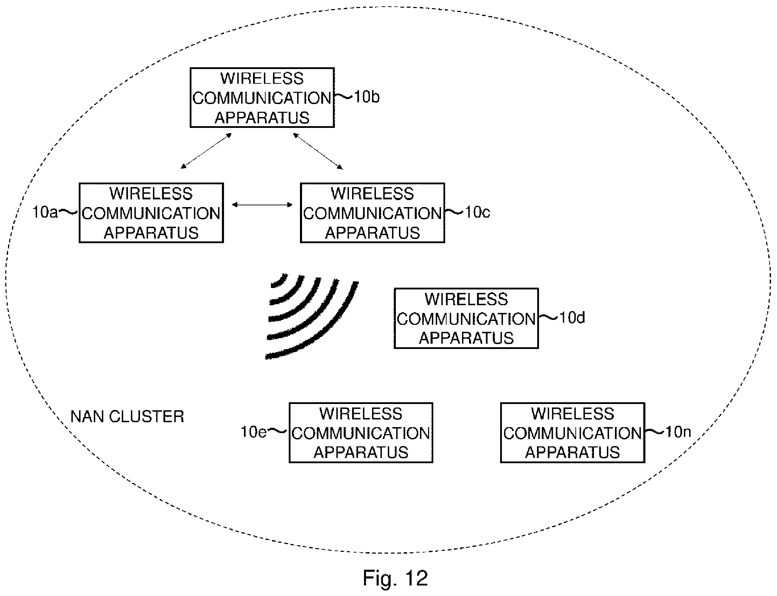

Subsequently, the wireless communication apparatus 10a performs the NAN cluster forming procedure using the second frequency band. As illustrated in Fig. 12, this procedure can discover the wireless communication apparatuses 10d, 10e, and 10n located in a wider area, and can cause these wireless communication apparatuses to join a NAN cluster.

In the examples illustrated in Figs. 11 and 12, there is no need to perform, for the wireless communication apparatuses 10b and 10c, the NAN cluster forming procedure using the second frequency band. In the fourth embodiment, the NAN cluster forming procedure using the first frequency band is performed for a wireless communication apparatus present over a short distance. Subsequently, the NAN cluster forming procedure using the second frequency band is performed for a wireless communication apparatus located in a wider area.

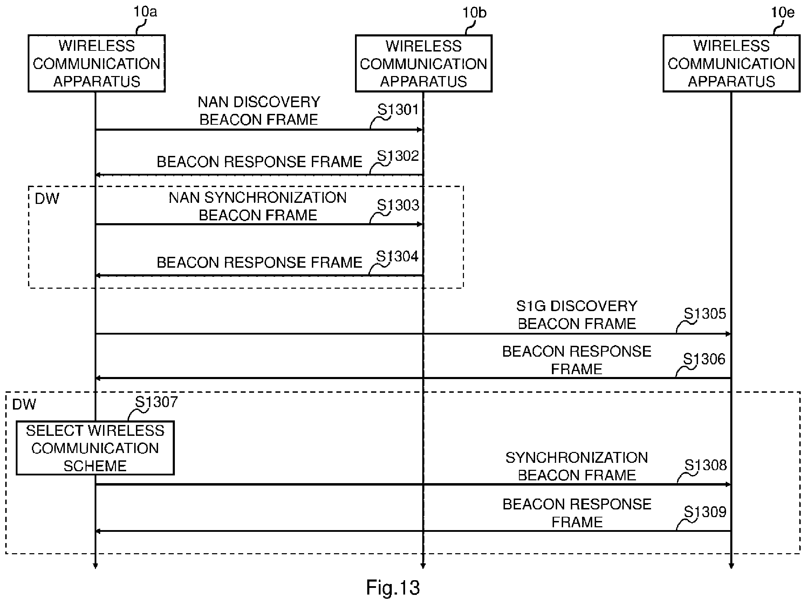

With reference to Fig. 13, a NAN cluster forming procedure according to the fourth embodiment will be described. In an example illustrated in Fig. 10, the wireless communication apparatus 10a discovers the wireless communication apparatuses 10b and 10e, and causes the wireless communication apparatuses 10b and 10e to join a NAN cluster. The wireless communication apparatus 10b is present within an area in which a wireless frame transmitted by using the first frequency band is received. The wireless communication apparatus 10e is present within an area in which a wireless frame transmitted by using the first frequency band cannot received, but at which a wireless frame transmitted by using the second frequency band is received.

First, the communicator 120 of the wireless communication apparatus 10a transmits a discovery beacon frame to the wireless communication apparatuses 10b and 10e by using the first frequency band (Step S1301). In other words, the communicator 120 of the wireless communication apparatus 10a transmits a NAN discovery beacon frame. As a result, only the wireless communication apparatus 10b receives the discovery beacon frame.

Next, the communicator 120 of the wireless communication apparatus 10b transmits a beacon response frame to the wireless communication apparatus 10a by using the first frequency band (Step S1302). Through the operation of Steps S1301 and S1302, a DW is started.

Next, the communicator 120 of the wireless communication apparatus 10a transmits a synchronization beacon frame to the wireless communication apparatus 10b by using the first frequency band (Step S1303). In other words, the communicator 120 of the wireless communication apparatus 10a transmits a NAN synchronization beacon frame. Next, the wireless communication apparatus 10b transmits a beacon response frame to the wireless communication apparatus 10a by using the first frequency band (Step S1304). In this procedure, the wireless communication apparatus 10b can join the NAN cluster. Note that the wireless communication apparatuses 10a and 10b actually exchange an SDF, but description of such procedure will be omitted.

Next, operation of Steps S1305 to S1309 is performed. The operation of Steps S1305 to S1309 is similar to the operation of Steps S501 to S505 described with reference to Fig. 5, and thus detailed description thereof will be omitted. Through the operation of Steps S1305 to S1309, the wireless communication apparatus 10a can discover the wireless communication apparatus 10e, and the wireless communication apparatus 10e can join the NAN cluster. Note that the wireless communication apparatuses 10a and 10e actually exchange an SDF, but description of such procedure will be omitted.

Note that, also in the fourth embodiment, as described in the second embodiment, before the operation of Step S1305, which of the first mode or the second mode the wireless communication apparatus 10a is in may be determined. Also in the fourth embodiment, as described in the third embodiment, the timer may be measured and expiration of the timer may be awaited, after the operation of Step S1306.

As described above, the fourth embodiment is described. According to the fourth embodiment, for a wireless communication apparatus not requiring the NAN cluster forming procedure using the second frequency band, the procedure is not performed. With this, in addition to the advantages described in the first to third embodiments, it is possible to suppress the Duty ratio limited by the wireless communication scheme according to the IEEE802.11ah standard.

5. Fifth Embodiment

Next, a fifth embodiment will be described. The first to fourth embodiments describe the examples in which the discovery beacon frame is transmitted by using the second frequency band when a wireless communication apparatus located in a wider area is discovered.

In the fifth embodiment, a plurality of wireless communication apparatuses operate as NAN master devices so as to discover a wireless communication apparatus located in a much wider area and to cause the wireless communication apparatus to join a cluster.

For example, consider an example in which the wireless communication apparatus 10a causes the wireless communication apparatuses 10b, 10c, 10d, 10e, and 10n to join a NAN cluster. Assume that a wireless frame transmitted by the wireless communication apparatus 10a using the second frequency band is received at the wireless communication apparatuses 10b and 10c and cannot be received at the wireless communication apparatuses 10d, 10e, and 10n.

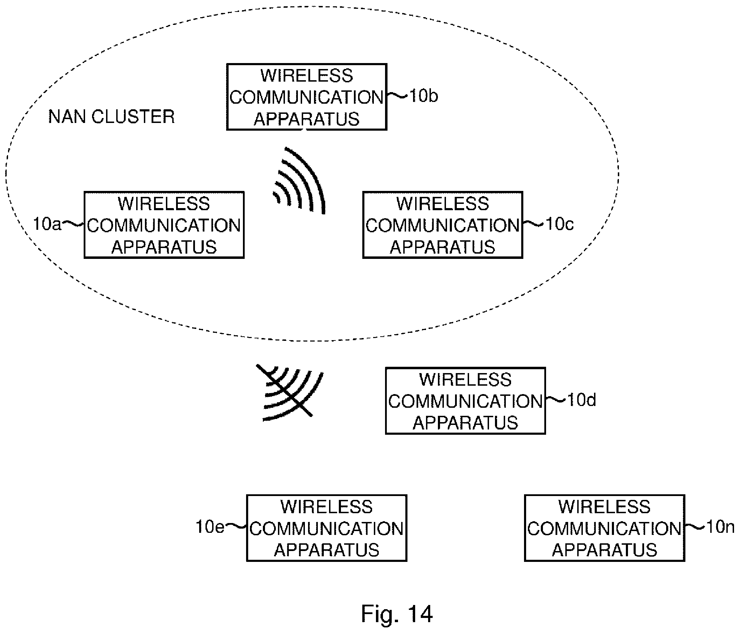

The wireless communication apparatus 10a performs the NAN cluster forming procedure using the second frequency band. As illustrated in Fig. 14, this procedure can discover only the wireless communication apparatuses 10b and 10c, and can cause these wireless communication apparatuses to join a NAN cluster. On the other hand, a wireless frame transmitted by using the second frequency band cannot be received at the wireless communication apparatuses 10d, 10e, and 10n, thereby preventing the wireless communication apparatuses 10d, 10e, and 10n from being discovered.

In the fifth embodiment, after the wireless communication apparatus 10a performs the NAN cluster forming procedure, one of the wireless communication apparatuses 10b and 10c joining the NAN cluster performs the NAN cluster forming procedure using the second frequency band. For example, the wireless communication apparatus 10c is located closer to the wireless communication apparatuses 10d, 10e, and 10n than the wireless communication apparatus 10a is.

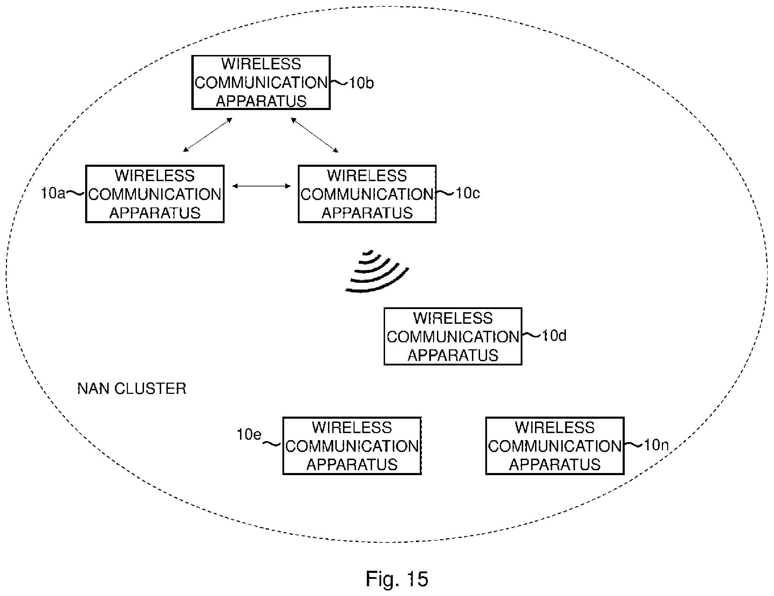

As illustrated in Fig. 15, when a wireless frame transmitted by the wireless communication apparatus 10c using the second frequency band is received at the wireless communication apparatuses 10d, 10e, and 10n, the wireless communication apparatus 10c operates as a NAN master device, thereby allowing the wireless communication apparatuses 10d, 10e, and 10n to join the NAN cluster.

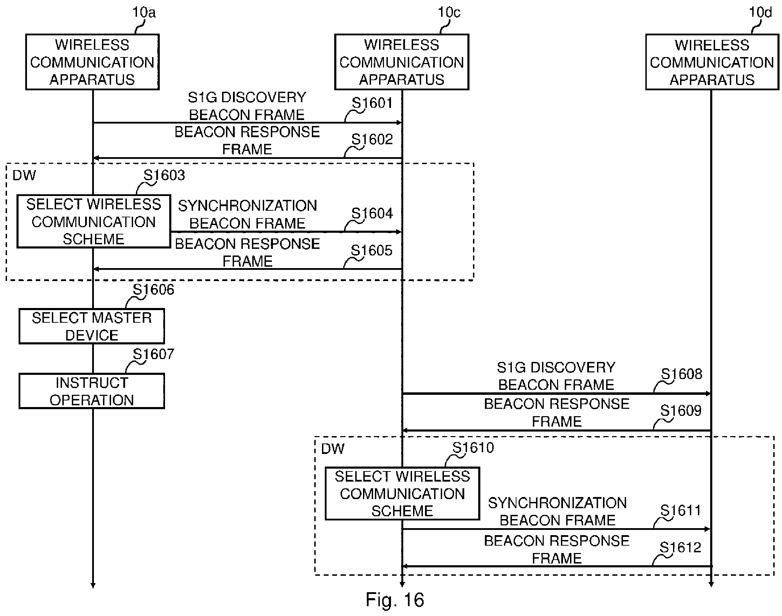

With reference to Fig. 16, a NAN cluster forming procedure according to the fifth embodiment will be described. In an example illustrated in Fig. 16, the wireless communication apparatus 10a discovers the wireless communication apparatus 10c, and causes the wireless communication apparatus 10c to join a NAN cluster. The wireless communication apparatus 10a instructs the wireless communication apparatus 10c to operate as a NAN master device. The wireless communication apparatus 10c performs the NAN cluster forming procedure in a manner similar to that of the wireless communication apparatus 10a. The wireless communication apparatus 10c discovers the wireless communication apparatus 10d, and causes the wireless communication apparatus 10d to join the NAN cluster.

First, the wireless communication apparatus 10a performs, as a NAN master device, the NAN cluster forming procedure. The NAN cluster procedure is performed in Steps S1601 to S1605. The operation of Steps S1601 to S1605 is similar to the operation of Steps S501 to S505 described with reference to Fig. 5, and thus detailed description thereof will be omitted. Through the operation of Steps S1601 to S1605, the wireless communication apparatus 10a can discover the wireless communication apparatus 10c, and the wireless communication apparatus 10c can join the NAN cluster. Note that the wireless communication apparatus 10a and the wireless communication apparatuses 10b and 10c actually exchange an SDF, but description of such procedure will be omitted.

Next, the controller 110 of the wireless communication apparatus 10a selects the wireless communication apparatus 10 operating as the NAN master device, from among the wireless communication apparatuses 10 joining the NAN cluster (Step S1606). In the example illustrated in Fig. 16, the wireless communication apparatus 10c is selected.

The wireless communication apparatus 10 operating as the NAN master device may be selected, for example, based on a location measured in Step S1603. For example, the wireless communication apparatus 10 located farthest from the wireless communication apparatus 10a may be selected. In this manner, the NAN cluster can be formed in a wider area. The wireless communication apparatus 10 operating as the NAN master device may be selected randomly.

Next, the controller 110 instructs the wireless communication apparatus 10c selected in Step S1606 to operate as a NAN master device (Step S1607). This instruction is indicated by transmitting any wireless frame, such as a synchronization beacon frame, to the wireless communication apparatus 10c.

In the NAN protocol, the wireless communication apparatus 10 periodically exchanges a synchronization beacon frame including a value referred to as an Anchor Master Rank (AMR) to record an AMR of the wireless communication apparatus 10 itself. Through this AMR record, the wireless communication apparatus 10 including the highest AMR in the NAN cluster operates as a NAN master device.

In the present embodiment, the wireless communication apparatus 10a instructs the selected wireless communication apparatus 10c to operate as a NAN master device.

Next, the wireless communication apparatus 10c performs, as a NAN master device, the NAN cluster forming procedure. The NAN cluster procedure is performed in Steps S1608 to S1612. The operation of Steps S1608 to S1612 is similar to the operation of Steps S501 to S505 described with reference to Fig. 5, and thus detailed description thereof will be omitted. Through the operation of Steps S1608 to S1612, the wireless communication apparatus 10c can discover the wireless communication apparatus 10d, and the wireless communication apparatus 10d can join the NAN cluster. Note that the wireless communication apparatus 10c and the wireless communication apparatus 10d actually exchange an SDF, but description of such procedure will be omitted.

In the example illustrated in Fig. 16, only the wireless communication apparatus 10c joining the NAN cluster operates as the NAN master device, but the plurality of wireless communication apparatuses 10 may operate as the NAN master device in order.

In operation of Step S1603 in Fig. 16, the wireless communication apparatus 10a selects which of the first wireless communication scheme or the second wireless communication scheme is to be employed for wireless communication with the wireless communication apparatus 10c. In operation of Step S1610, the wireless communication apparatus 10a selects which of the first wireless communication scheme or the second wireless communication scheme is to be employed for wireless communication with the wireless communication apparatus 10d.

The foregoing description includes, for example, a case where the first wireless communication scheme is selected in the operation of Step S1603 and where the second wireless communication scheme is selected in the operation of Step S1610. In this case, in the NAN cluster formed by the operation in Fig. 16, wireless communication between the wireless communication apparatus 10a and the wireless communication apparatus 10c using the first wireless communication scheme, and wireless communication between the wireless communication apparatus 10a and the wireless communication apparatus 10d using the second wireless communication scheme coexist.

The present embodiment enables communication using the first wireless communication scheme and communication using the second wireless communication scheme to coexist. In this manner, the present embodiment selects an optimum wireless communication scheme depending on a communication condition between the wireless communication apparatuses 10, thereby allowing a NAN cluster in which different wireless communication schemes coexist to be formed.

Note that, also in the fifth embodiment, as described in the second embodiment, before the operation of Step S1601, which of the first mode or the second mode the wireless communication apparatus 10a is in may be determined. Also in the fifth embodiment, as described in the third embodiment, the timer may be measured and expiration of the timer may be awaited, after the operation of Step S1602 and S1609. Also in the fifth embodiment, as described in the fourth embodiment, the NAN cluster forming procedure using the first frequency band may be performed before the NAN cluster forming procedure using the second frequency band is performed.

As described above, the fifth embodiment is described. According to the fifth embodiment, each of the plurality of wireless communication apparatuses operate as the NAN master device. With this, in addition to the advantages described in the first to fourth embodiments, it is possible to configure a NAN cluster formed by wireless communication apparatuses located in a much wider area.

6. Sixth Embodiment

Next, a sixth embodiment will be described. The fifth embodiment describes the example in which a plurality of wireless communication apparatuses operate as NAN master devices so as to discover a wireless communication apparatus located in a much wider area and to cause the wireless communication apparatus to join a cluster.

Also in the sixth embodiment, a plurality of wireless communication apparatuses operate as NAN master devices so as to discover a wireless communication apparatus located in a much wider area and to cause the wireless communication apparatus to join a cluster.

For example, consider an example in which the wireless communication apparatus 10a causes the wireless communication apparatuses 10b, 10c, 10d, 10e, and 10n to join a NAN cluster. Assume that a wireless frame transmitted by the wireless communication apparatus 10a using the second frequency band is received at the wireless communication apparatuses 10b, 10c, 10d, 10e, and 10n. On the other hand, assume that a wireless frame transmitted by using the first frequency band cannot received at the wireless communication apparatuses 10d, 10e, and 10n.

The wireless communication apparatus 10a can discover the wireless communication apparatuses 10d, 10e, and 10n, but fails to perform wireless communication with the wireless communication apparatuses 10d, 10e, and 10n by using the first frequency band. In such a case, for example, the wireless communication apparatus 10a fails to perform stable communication when the wireless communication apparatuses 10d, 10e, and 10n require communication of large amounts of data.

Also in the sixth embodiment, after the wireless communication apparatus 10a performs the NAN cluster forming procedure, one of the wireless communication apparatuses 10b and 10c joining the NAN cluster performs the NAN cluster forming procedure. For example, the wireless communication apparatus 10c is located closer to the wireless communication apparatuses 10d, 10e, and 10n than the wireless communication apparatus 10a is.

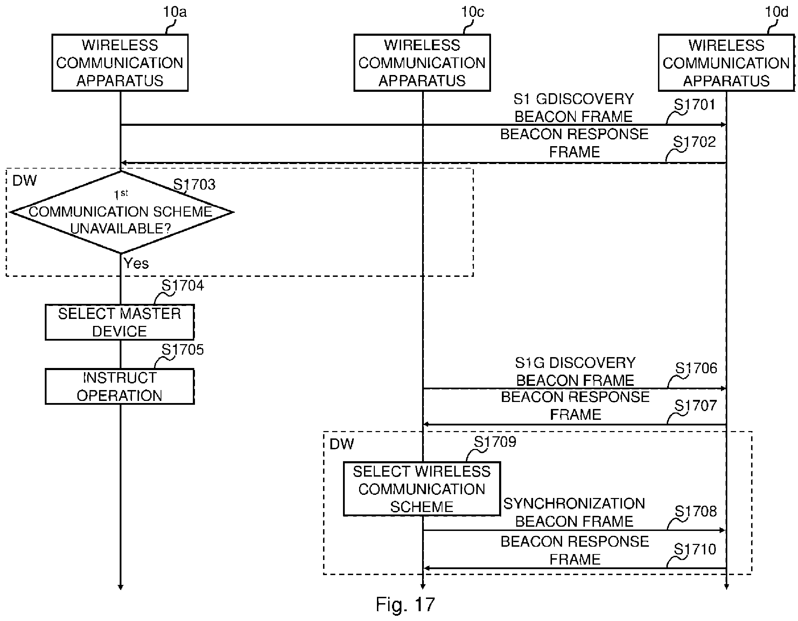

With reference to Fig. 17, a NAN cluster forming procedure according to the sixth embodiment will be described. In an example illustrated in Fig. 17, the wireless communication apparatus 10a discovers the wireless communication apparatus 10c, and causes the wireless communication apparatus 10c to join a NAN cluster. The wireless communication apparatus 10a discovers the wireless communication apparatus 10d, but fails to stably perform wireless communication with the wireless communication apparatus 10d in the first wireless communication scheme. The wireless communication apparatus 10a instructs the wireless communication apparatus 10c to operate as a NAN master device. The wireless communication apparatus 10c performs the NAN cluster forming procedure in a manner similar to that of the wireless communication apparatus 10a. The wireless communication apparatus 10c discovers the wireless communication apparatus 10d, and causes the wireless communication apparatus 10d to join the NAN cluster.

Assume, in the example illustrated in Fig. 17, that the wireless communication apparatus 10c joins the NAN cluster, according to the NAN cluster forming procedure with the wireless communication apparatus 10a. Also, assume that the wireless communication apparatus 10c can perform wireless communication with the wireless communication apparatus 10d in the first wireless communication scheme.

First, the communicator 120 of the wireless communication apparatus 10a transmits a discovery beacon frame to the wireless communication apparatus 10d by using the second frequency band (Step S1701). Next, the communicator 120 of the wireless communication apparatus 10d transmits a beacon response frame to the wireless communication apparatus 10a by using the second frequency band (Step S1702). Through the operation of Steps S1701 and S1702, a DW is started.

Next, the controller 110 of the wireless communication apparatus 10a selects which of the first wireless communication scheme or the second wireless communication scheme is to be employed for wireless communication with the wireless communication apparatus 10d (Step 1703). This selection is performed in a manner similar to that described in the first embodiment and the like.

When, in Step S1703, wireless communication with the wireless communication apparatus 10d is determined to fail in the first wireless communication scheme, the controller 110 of the wireless communication apparatus 10a selects the wireless communication apparatus 10 operating as the NAN master device, from among the wireless communication apparatuses 10 joining the NAN cluster (Step S1704). In the example illustrated in Fig. 17, the wireless communication apparatus 10c is selected. The selection of the NAN master device is performed in a manner similar to that described in the fifth embodiment.

Note that, in Step S1704, when wireless communication with the wireless communication apparatus 10d is determined to be performable in the first wireless communication scheme, the wireless communication apparatus 10a transmits a synchronization beacon frame to the wireless communication apparatus 10d to thereby cause the wireless communication apparatus 10d to join the NAN cluster, which is not illustrated.

Next, the controller 110 instructs the wireless communication apparatus 10c selected in Step S1604 to operate as a NAN master device (Step S1705). This instruction is indicated by transmitting any wireless frame, such as a synchronization beacon frame, to the wireless communication apparatus 10c.

Next, the wireless communication apparatus 10c performs, as a NAN master device, the NAN cluster forming procedure. The NAN cluster procedure is performed in Steps S1706 to S1710. The operation of Steps S1706 to S1710 is similar to the operation of Steps S501 to S505 described with reference to Fig. 5, and thus detailed description thereof will be omitted. Through the operation of Steps S1706 to S1710, the wireless communication apparatus 10c can discover the wireless communication apparatus 10d, and the wireless communication apparatus 10d can join the NAN cluster. Note that the wireless communication apparatus 10c and the wireless communication apparatus 10d actually exchange an SDF, but description of such procedure will be omitted.

Also in the example illustrated in Fig. 17, only the wireless communication apparatus 10c joining the NAN cluster operates as the NAN master device, but the plurality of wireless communication apparatuses 10 may operate as the NAN master device in order.

Note that, also in the sixth embodiment, as described in the second embodiment, before the operation of Step S1601, which of the first mode or the second mode the wireless communication apparatus 10a is in may be determined. Also in the fifth embodiment, as described in the third embodiment, the timer may be measured and expiration of the timer may be awaited, after the operation of Steps S1702 and S1707. Also in the fifth embodiment, as described in the fourth embodiment, the NAN cluster forming procedure using the first frequency band may be performed before the NAN cluster forming procedure using the second frequency band is performed.

As described above, the sixth embodiment is described. According to the sixth embodiment, each of the plurality of wireless communication apparatuses operate as the NAN master device. With this, in addition to the advantages described in the first to fifth embodiments, it is possible to configure a NAN cluster formed by wireless communication apparatuses located in a much wider area, thereby allowing wireless communication apparatuses in a cluster to stably perform wireless communication of large amounts of data.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted and received in the embodiments may be exchanged in the same or a different message or the same or a different element as or from that already described in the technical specifications, or may be exchanged in a new message or element to be defined. The information exchanged in the embodiments may be exchanged using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

7. Supplementary Notes

The whole or part of the embodiments and the alterations can be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note 1)

A first wireless communication apparatus (10a) comprising a controller (110) and a communicator (120) configured to:
in order to cause a second wireless communication apparatus (10b) to join a cluster including a plurality of wireless communication apparatuses (10),

transmit, to the second wireless communication apparatus (10b) by using second frequency band lower than first frequency band, a wireless frame for discovering the second wireless communication apparatus (10b);
in response to receiving a response frame from the second wireless communication apparatus (10b), select the first frequency band or second frequency band; and
transmit, to the second wireless communication apparatus (10b) by using the selected frequency band, a wireless frame for synchronizing with the second wireless communication apparatus (10b).

(Supplementary Note 2)

The first wireless communication apparatus (10a) according to supplementary note 1, wherein the controller (110) and the communicator (120) are further configured to select the first frequency band or second frequency band, based on a distance from the second wireless communication apparatus (10b).

(Supplementary Note 3)

The first wireless communication apparatus (10a) according to supplementary note 2, wherein the controller (110) and the communicator (120) are further configured to measure the distance, based on a time of departure and a time of arrival of a wireless frame exchanged with the second wireless communication apparatus (10b).

(Supplementary Note 4)

The first wireless communication apparatus (10a) according to supplementary note 2, wherein the controller (110) and the communicator (120) are further configured to measure the distance, based on location information received from the second wireless communication apparatus (10b).

(Supplementary Note 5)

The first wireless communication apparatus (10a) according to any one of supplementary notes 1 to 4, wherein the controller (110) and the communicator (120) are further configured to select the first frequency band or the second frequency band, based on a signal strength of the wireless frame received from the second wireless communication apparatus (10b).

(Supplementary Note 6)

The first wireless communication apparatus (10a) according to any one of supplementary notes 1 to 5, wherein the controller (110) and the communicator (120) are further configured to select the first frequency band or the second frequency band, based on a requirement indicated by the second wireless communication apparatus (10b).

(Supplementary Note 7)

The first wireless communication apparatus (10a) according to any one of supplementary notes 1 to 6, wherein the controller (110) and the communicator (120) are further configured to select the first frequency band or the second frequency band, based on a priority indicated by the second wireless communication apparatus (10b).

(Supplementary Note 8)

The first wireless communication apparatus (10a) according to any one of supplementary notes 1 to 7, wherein the first frequency band is 2.4 GHz, 5 GHz, or 6 GHz, and the second frequency band is less than 1 GHz.

(Supplementary Note 9)

The first wireless communication apparatus (10a) according to any one of supplementary notes 1 to 8, wherein the first frequency band is defined in a NAN protocol, and the second frequency band is defined in IEEE802.11ah.

(Supplementary Note 10)

The first wireless communication apparatus (10a) according to any one of supplementary notes 1 to 9, wherein the controller (110) and the communicator (120) are further configured to:

determine which of a first mode or a second mode the first wireless communication apparatus (10a) is in; and transmit, when determining that the first wireless communication apparatus (10a) is in the second mode, the wireless frame for discovering the second wireless communication apparatus (10b) to the second wireless communication apparatus (10b) by using the second frequency band.

(Supplementary Note 11)

The first wireless communication apparatus (10a) according to supplementary note 10, wherein the controller (110) and the communicator (120) are further configured to transmit, when determining that the first wireless communication apparatus (10a) is in the first mode, the wireless frame for discovering the second wireless communication apparatus (10b) to the second wireless communication apparatus (10b) by using the first frequency band.

(Supplementary Note 12)

The first wireless communication apparatus (10a) according to supplementary note 10 or 11, wherein the controller (110) and the communicator (120) are further configured to determine which of the first mode or the second mode the first wireless communication apparatus (10a) is in, based on whether the first wireless communication apparatus (10a) is moving.

(Supplementary Note 13)

The first wireless communication apparatus (10a) according to any one of supplementary notes 1 to 12, wherein the controller (110) and the communicator (120) are further configured to, in response to receiving the response frame from the second wireless communication apparatus (10b):

measure a timer; and
select the first frequency band or the second frequency band when the timer has elapsed a predetermined time.

(Supplementary Note 14)

The first wireless communication apparatus (10a) according to supplementary note 13, wherein the controller (110) and the communicator (120) are further configured to select the first frequency band or the second frequency band, based on a difference between a first distance from the second wireless communication apparatus (10b) measured before expiration of the timer and a second distance from the second wireless communication apparatus (10b) measured after the expiration of the timer.

(Supplementary Note 15)

The first wireless communication apparatus (10a) according to supplementary note 13 or 14, wherein the controller (110) and the communicator (120) are further configured to select the first frequency band or the second frequency band, based on a difference between a first signal strength of a wireless frame received from the second wireless communication apparatus (10b) before expiration of the timer and a second signal strength of a wireless frame received from the second wireless communication apparatus (10b), the second signal strength being measured after the expiration of the timer.

(Supplementary Note 16)

The first wireless communication apparatus (10a) according to any one of supplementary notes 1 to 15, wherein the controller (110) and the communicator (120) are further configured to, in order to cause a third wireless communication apparatus (10c) to join the cluster before causing the second wireless communication apparatus (10b) to join the cluster:
transmit, to the third wireless communication apparatus (10c) by using the first frequency band, a wireless frame for discovering the third wireless communication apparatus (10c); and
transmit, to the third wireless communication apparatus (10c) by using the first frequency band, a wireless frame for synchronization with the third wireless communication apparatus (10c), in response to receiving a response frame from the third wireless communication apparatus (10c).

(Supplementary Note 17)

The first wireless communication apparatus (10a) according to any one of supplementary notes 1 to 16, wherein the controller (110) and the communicator (120) are further configured to transmit, to the second wireless communication apparatus (10b) after causing the second wireless communication apparatus (10b) to join the cluster, a wireless frame for instructing the second wireless communication apparatus (10b) to operate as a master for procedure for causing a fourth wireless communication apparatus (10d) to join the cluster.

(Supplementary Note 18)

The first wireless communication apparatus (10a) according to any one of supplementary notes 1 to 17, wherein the controller (110) and the communicator (120) are further configured to, in order to cause a fifth wireless communication apparatus (10e) to join the cluster:

transmit, to the fifth wireless communication apparatus (10e) by using the second frequency band, a wireless frame for discovering the fifth wireless communication apparatus (10e);
select the first frequency band or the second frequency band in response to receiving a response frame from the fifth wireless communication apparatus (10e); and
transmit, to the second wireless communication apparatus (10b) after causing the second wireless communication apparatus (10b) to join the cluster, a wireless frame for instructing the second wireless communication apparatus (10b) to operate as a master for procedure for causing the fifth wireless communication apparatus (10e) to join the cluster, when the first frequency band is not selected.

(Supplementary Note 19)

A method performed by a first wireless communication apparatus (10a), the method including:

in order to cause a second wireless communication apparatus (10b) to join a cluster including a plurality of wireless communication apparatuses (10),

transmitting, to the second wireless communication apparatus (10b) by using second frequency band lower than first frequency band, a wireless frame for discovering the second wireless communication apparatus (10b);
in response to receiving a response frame from the second wireless communication apparatus (10b), selecting the first frequency band or second frequency band; and
transmitting, to the second wireless communication apparatus (10b) by using the selected frequency band, a wireless frame for synchronizing with the second wireless communication apparatus (10b).

(Supplementary Note 20)

A program causing, when executed, one or more processors in a first wireless communication apparatus (10a) to execute:
in order to cause a second wireless communication apparatus (10b) to join a cluster including a plurality of wireless communication apparatuses (10),

transmitting, to the second wireless communication apparatus (10b) by using second frequency band lower than first frequency band, a wireless frame for discovering the second wireless communication apparatus (10b);
in response to receiving a response frame from the second wireless communication apparatus (10b), selecting the first frequency band or second frequency band; and
transmitting, to the second wireless communication apparatus (10b) by using the selected frequency band, a wireless frame for synchronizing with the second wireless communication apparatus (10b).

(Supplementary Note 21)

A computer-readable non-transitory tangible storage medium storing thereon a program causing, when executed, one or more processors in a first wireless communication apparatus (10a) to execute:
in order to cause a second wireless communication apparatus (10b) to join a cluster including a plurality of wireless communication apparatuses (10),

transmitting, to the second wireless communication apparatus (10b) by using second frequency band lower than first frequency band, a wireless frame for discovering the second wireless communication apparatus (10b);
in response to receiving a response frame from the second wireless communication apparatus (10b), selecting the first frequency band or second frequency band; and
transmitting, to the second wireless communication apparatus (10b) by using the selected frequency band, a wireless frame for synchronizing with the second wireless communication apparatus (10b).

10    Wireless Communication Apparatus
101   Processor
102   Memory
104   Transceiver
110   Controller
120   Communicator

**Claims**

1.  A first wireless communication apparatus (10a) comprising a controller (110) and a communicator (120) configured to:
in order to cause a second wireless communication apparatus (10b) to join a cluster including a plurality of wireless communication apparatuses (10),

transmit, to the second wireless communication apparatus (10b) by using second frequency band lower than first frequency band, a wireless frame for discovering the second wireless communication apparatus (10b);
in response to receiving a response frame from the second wireless communication apparatus (10b), select the first frequency band or second frequency band; and
transmit, to the second wireless communication apparatus (10b) by using the selected frequency band, a wireless frame for synchronizing with the second wireless communication apparatus (10b).

2. The first wireless communication apparatus (10a) according to claim 1, wherein the controller (110) and the communicator (120) are further configured to select the first frequency band or second frequency band, based on a distance from the second wireless communication apparatus (10b).

3. The first wireless communication apparatus (10a) according to claim 2, wherein the controller (110) and the communicator (120) are further configured to measure the distance, based on a time of departure and a time of arrival of a wireless frame exchanged with the second wireless communication apparatus (10b).

4. The first wireless communication apparatus (10a) according to claim 2, wherein the controller (110) and the communicator (120) are further configured to measure the distance, based on location information received from the second wireless communication apparatus (10b).

5. The first wireless communication apparatus (10a) according to any one of claims 1 to 4, wherein the controller (110) and the communicator (120) are further configured to select the first frequency band or the second frequency band, based on a signal strength of the wireless frame received from the second wireless communication apparatus (10b).

6. The first wireless communication apparatus (10a) according to any one of claims 1 to 5, wherein the controller (110) and the communicator (120) are further configured to select the first frequency band or the second frequency band, based on a requirement indicated by the second wireless communication apparatus (10b).

7. The first wireless communication apparatus (10a) according to any one of claims 1 to 6, wherein the controller (110) and the communicator (120) are further configured to select the first frequency band or the second frequency band, based on a priority indicated by the second wireless communication apparatus (10b).

8. The first wireless communication apparatus (10a) according to any one of claims 1 to 7, wherein the first frequency band is 2.4 GHz, 5 GHz, or 6 GHz, and the second frequency band is less than 1 GHz.

9. The first wireless communication apparatus (10a) according to any one of claims 1 to 8, wherein the first frequency band is defined in a NAN protocol, and the second frequency band is defined in IEEE802.11ah.

10. The first wireless communication apparatus (10a) according to any one of claims 1 to 9, wherein the controller (110) and the communicator (120) are further configured to:

   determine which of a first mode or a second mode the first wireless communication apparatus (10a) is in; and transmit, when determining that the first wireless communication apparatus (10a) is in the second mode, the wireless frame for discovering the second wireless communication apparatus (10b) to the second wireless communication apparatus (10b) by using the second frequency band.

11. The first wireless communication apparatus (10a) according to claim 10, wherein the controller (110) and the communicator (120) are further configured to transmit, when determining that the first wireless communication apparatus (10a) is in the first mode, the wireless frame for discovering the second wireless communication apparatus (10b) to the second wireless communication apparatus (10b) by using the first frequency band.

12. The first wireless communication apparatus (10a) according to claim 10 or 11, wherein the controller (110) and the communicator (120) are further configured to determine which of the first mode or the second mode the first wireless communication apparatus (10a) is in, based on whether the first wireless communication apparatus (10a) is moving.

13. The first wireless communication apparatus (10a) according to any one of claims 1 to 12, wherein the controller (110) and the communicator (120) are further configured to, in response to receiving the response frame from the second wireless communication apparatus (10b):

   measure a timer; and
   select the first frequency band or the second frequency band when the timer has elapsed a predetermined time.

14. The first wireless communication apparatus (10a) according to claim 13, wherein the controller (110) and the communicator (120) are further configured to select the first frequency band or the second frequency band, based on a difference between a first distance from the second wireless communication apparatus (10b) measured before expiration of the timer and a second distance from the second wireless communication apparatus (10b) measured after the expiration of the timer.

15. The first wireless communication apparatus (10a) according to Claim 13 or 14, wherein the controller (110) and the communicator (120) are further configured to select the first frequency band or the second frequency band, based on a difference between a first signal strength of a wireless frame received from the second wireless communication apparatus (10b) before expiration of the timer and a second signal strength of a wireless frame received from the second wireless communication apparatus (10b), the second signal strength being measured after the expiration of the timer.

16. The first wireless communication apparatus (10a) according to any one of claims 1 to 15, wherein the controller (110) and the communicator (120) are further configured to, in order to cause a third wireless communication apparatus (10c) to join the cluster before causing the second wireless communication apparatus (10b) to join the c luster:
transmit, to the third wireless communication apparatus (10c) by using the first frequency band, a wireless frame for discovering the third wireless communication apparatus (10c); and
transmit, to the third wireless communication apparatus (10c) by using the first frequency band, a wireless frame for synchronization with the third wireless communication apparatus (10c), in response to receiving a response frame from the third wireless communication apparatus (10c).

17. The first wireless communication apparatus (10a) according to any one of claims 1 to 16, wherein the controller (110) and the communicator (120) are further configured to transmit, to the second wireless communication apparatus (10b) after causing the second wireless communication apparatus (10b) to join the cluster, a wireless frame for instructing the second wireless communication apparatus (10b) to operate as a master for procedure for causing a fourth wireless communication apparatus (10d) to join the cluster.

18. The first wireless communication apparatus (10a) according to any one of claims 1 to 17, wherein the controller (110) and the communicator (120) are further configured to, in order to cause a fifth wireless communication apparatus (10e) to join the cluster:

transmit, to the fifth wireless communication apparatus (10e) by using the second frequency band, a wireless frame for discovering the fifth wireless communication apparatus (10e);
select the first frequency band or the second frequency band in response to receiving a response frame from the fifth wireless communication apparatus (10e); and
transmit, to the second wireless communication apparatus (10b) after causing the second wireless communication apparatus (10b) to join the cluster, a wireless frame for instructing the second wireless communication apparatus (10b) to operate as a master for procedure for causing the fifth wireless communication apparatus (10e) to join the cluster, when the first frequency band is not selected.

19. A method performed by a first wireless communication apparatus (10a), the method including:
in order to cause a second wireless communication apparatus (10b) to join a cluster including a plurality of wireless communication apparatuses (10),

transmitting, to the second wireless communication apparatus (10b) by using second frequency band lower than first frequency band, a wireless frame for discovering the second wireless communication apparatus (10b);
in response to receiving a response frame from the second wireless communication apparatus (10b), selecting the first frequency band or second frequency band; and
transmitting, to the second wireless communication apparatus (10b) by using the selected frequency band, a wireless frame for synchronizing with the second wireless communication apparatus (10b).

20. A program causing, when executed, one or more processors in a first wireless communication apparatus (10a) to execute:
in order to cause a second wireless communication apparatus (10b) to join a cluster including a plurality of wireless communication apparatuses (10),

transmitting, to the second wireless communication apparatus (10b) by using second frequency band lower than first frequency band, a wireless frame for discovering the second wireless communication apparatus (10b);
in response to receiving a respe frame from the second wireless communication apparatus (10b), selecting the first frequency band or second frequency band; and
transmitting, to the second wireless communication apparatus (10b) by using the selected frequency band, a wireless frame for synchronizing with the second wireless communication apparatus (10b).

Fig. 1

Fig. 2

Fig. 3

EP 4 648 548 A1

EP 4 648 548 A1

| NAN MASTER DEVICE | | NAN NON-MASTER DEVICE |

NAN DISCOVERY BEACON FRAME — S401

BEACON RESPONSE FRAME — S402

DW

NAN SYNCHRONIZATION BEACON FRAME — S403

BEACON RESPONSE FRAME — S404

PUBLISH FRAME — S405

SUBSCRIBE FRAME — S406

Fig. 4

EP 4 648 548 A1

10a

WIRELESS
COMMUNICATION
APPARATUS

10b

WIRELESS
COMMUNICATION
APPARATUS

S1G DISCOVERY BEACON FRAME — S501

BEACON RESPONSE FRAME — S502

DW

SELECT WIRELESS
COMMUNICATION
SCHEME — S503

SYNCHRONIZATION BEACON FRAME — S504

BEACON RESPONSE FRAME — S505

PUBLISH FRAME — S506

SUBSCRIBE FRAME — S507

Fig.5

**Fig.6**

Fig.7

EP 4 648 548 A1

Fig.8

Fig.9

EP 4 648 548 A1

Fig.10

Fig. 11

WIRELESS COMMUNICATION APPARATUS ~10b

WIRELESS COMMUNICATION APPARATUS ~10c

WIRELESS COMMUNICATION APPARATUS 10a~

WIRELESS COMMUNICATION APPARATUS ~10d

WIRELESS COMMUNICATION APPARATUS ~10n

WIRELESS COMMUNICATION APPARATUS 10e~

NAN CLUSTER

Fig. 12

Fig.13

NAN CLUSTER

WIRELESS COMMUNICATION APPARATUS ~10b

10a~ WIRELESS COMMUNICATION APPARATUS

WIRELESS COMMUNICATION APPARATUS ~10c

WIRELESS COMMUNICATION APPARATUS ~10d

10e~ WIRELESS COMMUNICATION APPARATUS

WIRELESS COMMUNICATION APPARATUS ~10n

Fig. 14

EP 4 648 548 A1

Fig. 15

Fig. 16

EP 4 648 548 A1

Fig. 17

EP 4 648 548 A1

# EP 4 648 548 A1

Europäisches
Patentamt

European
Patent Office

Office européen
des brevets

## EUROPEAN SEARCH REPORT

**Application Number**

EP 25 17 1669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/235255 A1 (ANSARI IMRAN [IN] ET AL) 29 July 2021 (2021-07-29) | 1,19,20 | INV.<br>H04W84/18 |
| Y | * paragraph [0041] - paragraph [0050]; figure 2 *<br>* paragraph [0066] - paragraph [0076]; figures 5, 6 *<br>----- | 2-18 | ADD.<br>H04W84/12 |
| Y | EP 3 833 151 A1 (SAMSUNG ELECTRONICS CO LTD [KR]) 9 June 2021 (2021-06-09)<br>* paragraph [0141] - paragraph [0150]; figure 5 *<br>* paragraph [0195] - paragraph [0246]; figures 11-15 *<br>----- | 2-18 | |
| A | LEE BYUNG MOO ET AL: "An Easy Network Onboarding Scheme for Internet of Things Networks",<br>IEEE ACCESS,<br>vol. 7, 23 January 2019 (2019-01-23),<br>pages 8763-8772, XP011706368,<br>DOI: 10.1109/ACCESS.2018.2890072<br>[retrieved on 2019-01-21]<br>* the whole document *<br>----- | 1-20 | |

**TECHNICAL FIELDS SEARCHED (IPC)**

H04W

The present search report has been drawn up for all claims

| Place of search | Date of completion of the search | Examiner |
|---|---|---|
| Munich | 10 September 2025 | Lastoria, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1669

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2025

| Patent document cited in search report | Publication date | Patent family member(s) | Publication date |
|---|---|---|---|
| US 2021235255 A1 | 29-07-2021 | NONE | |
| EP 3833151 A1 | 09-06-2021 | EP 3456148 A1 | 20-03-2019 |
| | | EP 3833151 A1 | 09-06-2021 |
| | | KR 20180005471 A | 16-01-2018 |
| | | US 2018014341 A1 | 11-01-2018 |
| | | WO 2018008849 A1 | 11-01-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024076276 A